# EUROPEAN PATENT SPECIFICATION

(11) **EP 4 201 289 B1**
(45) Date of publication and mention of the grant of the patent: **18.02.2026**
(21) Application number: 22217266.0
(22) Date of filing: 19.05.2017
(51) Int. Cl.: A47L 9/28

(54) **ROBOT CLEANER**
REINIGUNGSROBOTER
ROBOT NETTOYEUR

(30) Priority: 20.05.2016 KR 20160062415; 10.06.2016 KR 20160072690; 26.08.2016 KR 20160109321; 27.10.2016 KR 20160141106; 30.12.2016 KR 20160184446
(43) Date of publication of application: 28.06.2023
(62) Divisional of application: 21166598.9
(73) Proprietor: LG Electronics Inc., Seoul 07336 (KR)
(72) Inventor: NAM, Bohyun, Seoul (KR); SHIM, Inbo, Seoul (KR); SUNG, Jihoon, Seoul (KR); PARK, Sojin, Seoul (KR); SONG, Seunghyun, Seoul (KR); LEE, Sangkyu, Seoul (KR); JUN, Woochan, Seoul (KR)
(74) Representative: Vossius & Partner Patentanwälte Rechtsanwälte mbB

(56) References cited:
- EP-A1- 2 417 893
- CN-U- 202 714 799
- JP-A- 2007 143 667

## Description

### BACKGROUND OF THE INVENTION

### 1. Field of the Invention

The present disclosure relates to a robot cleaner that performs a function of cleaning a floor while traveling by itself in a certain area.

### 2. Description of the Conventional Art

In general, robots have been developed for industrial purposes to play a role in factory automation. Recently, application fields of robots have extended, and robots for medical purpose, space navigation robots, etc., and even home robots available that may be used in general houses have been developed.

A representative example of home robots is a robot cleaner. The robot cleaner performs a function of cleaning a floor while traveling by itself in a certain area. For example, a household robot cleaner is configured to suck dust (including foreign substances) on a floor or mop the floor while autonomously traveling inside a house.

Such a robot cleaner generally includes a rechargeable battery and various sensors for avoiding an obstacle during traveling. Thus, the robot cleaner performs a cleaning function while traveling by itself.

In order to allow the autonomous traveling of a robot cleaner to be smoothly performed, it is important to set the entire traveling route and sense obstacles on the traveling route. The robot cleaner may also perform a function of photographing or monitoring the inside of a house using autonomous traveling characteristics thereof. In order to perform the above-described functions, various sensors are used in the robot cleaner, but studies for an optimized design have not been satisfactory yet.

In addition, a typical robot cleaner has a structure in which a suction unit is provided at a lower portion of a cleaner body. However, the structure in which the suction unit is built in the cleaner body has problems in that the suction force of the robot cleaner is decreased, that the separation of a brush roller is impossible, and the like. Accordingly, there has been proposed a structure in which a suction unit is disposed to protrude from a cleaner body as disclosed in the following patent documents. However, the structure has many problems to be solved in that the probability of collision between the suction unit and an obstacle is increased, that the suction unit is located in a blind spot of a sensing unit provided in the cleaner body, and the like.

In a structure in which a dust container is coupled to a cleaner body, and a dust container cover is coupled to the dust container, it is important to accurately assemble the components and easily perform the assembly. However, any product having the structure has not been released yet.

In addition, air introduced into a robot cleaner typically passes through a HEPA filter for filtering fine dust before the air is discharged through an exhaust port. In the existing robot cleaners, there is an inconvenience that a portion of a cleaner body should be disassembled so as to replace or clean the HEPA filter.

### Prior Art Documents

Patent Document 1: U.S. Patent Laid-Open Publication No. US 2013/0305484 A1 (published on November 21, 2013)
Patent Document 2: U.S. Patent Laid-Open Publication No. US 2013/0061420 A1 (published on March 14, 2013)
Patent Document 3: U.S. Patent Laid-Open Publication No. US 2013/0061417 A1 (published on March 14, 2013)
EP 3 403 561 A1 is a related prior art document which is considered the closest prior art and discloses a robot cleaner comprising the preamble of independent claim 1.

### SUMMARY OF THE INVENTION

An aspect of the detailed description is to provide a structure in which a dust container can be firmly fixed to a dust container accommodation part, and assembly convenience of a cleaner body, a dust container, and a dust container cover can be improved.

To achieve these and other advantages and in accordance with the purpose of this specification, as embodied and broadly described herein, a robot cleaner is provided as defined by the independent clam 1. Preferred embodiments are recited by the dependent claims.

The accommodation part that is disposed to cover an upper portion of each of the infrared receiving units and has an opened front to receive infrared light is provided in the middle frame of the dust container cover, so that it is possible to prevent a malfunction of the infrared receiving unit, caused by a three-wavelength lamp disposed on a ceiling or sunlight. In addition, the side surface of the dust container cover is disposed to protrude further than the top surface of the cleaner body, so that the receiving performance of the infrared receiving unit can be improved.

Further scope of applicability of the present application will become more apparent from the detailed description given hereinafter. However, it should be understood that the detailed description and specific examples, while indicating exemplary embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating an example of a robot cleaner according to an exemplary embodiment;
FIG. 2 is a plan view of the robot cleaner shown in FIG. 1;
FIG. 3 is a side view of the robot cleaner shown in FIG. 1;
FIG. 4 is a view illustrating a sensing unit shown in FIG. 1;
FIG. 5 is an exploded perspective view of the sensing unit shown in FIG. 4;
FIG. 6 is a view conceptually illustrating a section of the sensing unit shown in FIG. 4;
FIG. 7 is a view illustrating separation of an image photographed by a first sensing part shown in FIG. 6;
FIG. 8 is a view illustrating a concept that an obstacle is sensed by a second sensing part shown in FIG. 4;
FIG. 9 is a block diagram illustrating main parts related to avoidance of an obstacle using the second sensing part;
FIG. 10 is a view illustrating a beam irradiation range of first and second pattern irradiating parts and an obstacle detection range of an image acquisition part;
FIG. 11 is a view illustrating a beam having a first pattern, irradiated by the first pattern irradiating part;
FIG. 12 is a conceptual view illustrating shapes of first and second beam patterns irradiated onto each obstacle for each shape of the obstacle.
FIG. 13 is a view illustrating a suction unit shown in FIG. 1;
FIG. 14 is a side view of the suction unit shown in FIG. 13;
FIG. 15 is a front view of the suction unit shown in FIG. 13;
FIG. 16 is a view illustrating a bottom portion of the suction unit shown in FIG. 13;
FIG. 17 is a view illustrating a concept that a brush roller protrudes through a manipulation of a manipulation part in the suction unit shown in FIG. 13;
FIG. 18 is a conceptual view illustrating a flow of air inside the robot cleaner shown in FIG. 1;
FIG. 19 is a view illustrating a state in which a dust container is mounted in a dust container accommodation part in the robot cleaner shown in FIG. 1;
FIG. 20 is a view illustrating the dust container shown in FIG. 1;
FIG. 21 is an exploded perspective view illustrating main parts of the dust container illustrated in FIG. 20;
FIG. 22 is a bottom view of the dust container shown in FIG. 20;
FIG. 23 is a view illustrating a state in which the dust container is mounted in the dust container accommodation part shown in FIG. 19;
FIG. 24 is a front view of the dust container shown in FIG. 20;
FIGS. 25 and 26 are perspective views of a flow separation member illustrated in FIG. 24, viewed from different directions;
FIG. 27 is a sectional view taken along the line A-A of FIG. 24;
FIG. 28 is a left side view of the dust container of FIG. 20;
FIG. 29 is a conceptual view illustrating the dust container of FIG. 20, excluding the upper case;
FIG. 30 is a conceptual view illustrating a state in which an upper case and an upper cover are separated from the dust container shown in FIG. 20;
FIG. 31 is a view illustrating a dust container cover shown in FIG. 1;
FIG. 32 is an exploded perspective view of the dust container cover shown in FIG. 31;
FIG. 33 is a view illustrating a rear surface of the dust container cover shown in FIG. 31;
FIG. 34 is a sectional view illustrating a structure in which a hook part shown in FIG. 33 is fastened to the dust container;
FIG. 35 is a view illustrating an inside of the dust container accommodation part shown in FIG. 19;
FIG. 36 is a conceptual view illustrating a state in which a filter unit shown in FIG. 35 is rotated; and
FIG. 37 is an exploded perspective view of the filter unit shown in FIG. 36.

### DETAILED DESCRIPTION OF EXEMPLARY EMBODIMENTS

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a robot cleaner according to an exemplary embodiment will be described in more detail with reference to the accompanying drawings.

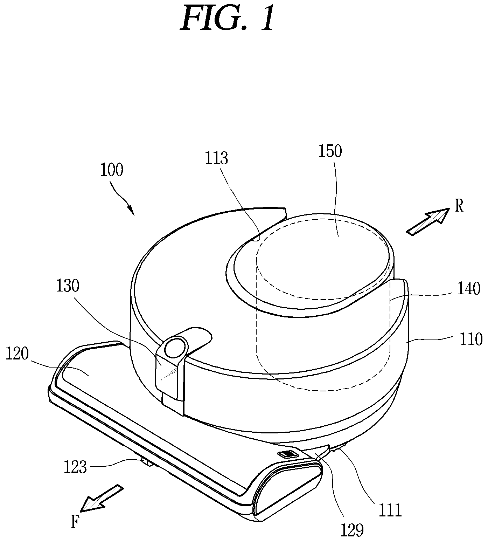

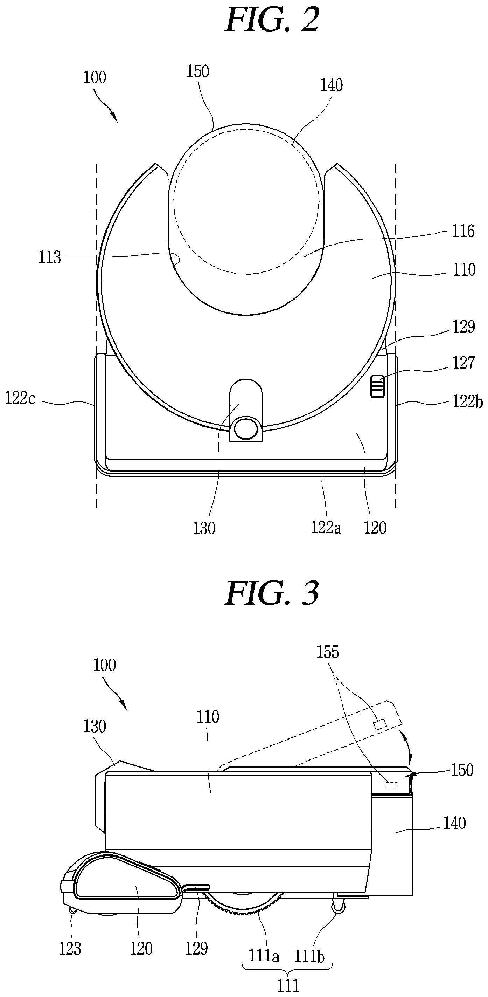

FIG. 1 is a perspective view illustrating an example of a robot cleaner 100 according to an exemplary embodiment. FIG. 2 is a plan view of the robot cleaner 100 shown in FIG. 1. FIG. 3 is a side view of the robot cleaner 100 shown in FIG. 1.

Referring to FIGS. 1 to 3, the robot cleaner 100 performs a function of cleaning a floor while traveling by itself in a certain area. Here, the cleaning of the floor includes sucking dust (including foreign substances) of the floor or mopping the floor.

The robot cleaner 100 includes a cleaner body 110, a suction unit 120, a sensing unit 130, and a dust container 140.

The cleaner body 110 is provided with a controller (not shown) for controlling the robot cleaner 100 and a wheel unit 111 for allowing the robot cleaner 100 to travel. The robot cleaner 100 may be moved in all directions or be rotated by the wheel unit 111.

The wheel unit 111 includes main wheels 111a and a sub-wheel 111b.

The main wheels 111a are respectively provided at both sides of the cleaner body 110 to be rotatable in one direction or the other direction according to a control signal of the controller. The main wheels 111a may be configured to be driven independently from each other. For example, the main wheels 111a may be driven by different driving motors, respectively.

The sub-wheel 111b supports the cleaner body 110 together with the main wheels 111a, and is configured to assist traveling of the robot cleaner 100 through the main wheels 111a. The sub-wheel 111b may also be provided in the suction unit 120 which will be described later.

As described above, the controller controls the driving of the wheel unit 111, so that the robot cleaner 100 autonomously travels on the floor.

Meanwhile, a battery 180 that supplies power to the robot cleaner 100 is mounted in the cleaner body 110. The battery 180 is rechargeable, and may be configured to be attachable/detachable to/from a bottom surface of the cleaner body 110.

The suction unit 120 is disposed in a shape protruding from one side of the cleaner body 110 to suck air containing dust. The one side may be a side at which the cleaner body 110 travels in a forward direction F, i.e., the front of the cleaner body 110.

In these figures, it is illustrated that the suction unit 120 has a shape protruding frontward, leftward, and rightward at the one side of the cleaner body 110. Specifically, a front end portion of the suction unit 120 is disposed at a position spaced apart forward from the one side of the cleaner body 110, and both left and right end portions of the suction unit 120 are disposed at positions spaced apart leftward and rightward from the one side of the cleaner body 110, respectively.

As the cleaner body 110 is formed in a circular shape, and both sides of a rear end portion of the suction unit 120 are respectively formed to protrude leftward and rightward from the cleaner body 110, empty spaces, i.e., gaps may be formed between the cleaner body 110 and the suction unit 120. The empty spaces are spaces between both left and right end portions of the cleaner body 110 and both left and right end portions of the suction unit 120, and have a shape recessed inward of the robot cleaner 100.

When an obstacle is inserted into the empty space, there may be caused a problem that the robot cleaner 100 is caught by the obstacle and does not move. In order to prevent this problem, a cover member 129 may be disposed to cover at least one portion of the empty space. The cover member 129 may be provided to the cleaner body 110 or the suction unit 120. In this exemplary embodiment, it is illustrated that the cover members 129 protrude from both sides of the rear end portion of the suction unit 120 to cover outer circumferential surfaces of the cleaner body 110, respectively.

The cover members 129 are disposed to fill in the empty space, i.e., at least one portion of the empty spaces between the cleaner body 110 and the suction unit 120. In other words, the cover member 129 is disposed to fill in at least one portion of spaces recessed inward between left and right outer circumferential surfaces of the cleaner body 110 formed in a curve and both left and right end portions of the suction unit 120 formed to protrude from the respective left and right outer circumferential surfaces. Thus, it is possible to realize a structure capable of preventing an obstacle from being caught in the empty pace or easily escaping from an obstacle even when the obstacle is caught in the empty space.

The cover member 129 formed to protrude from the suction unit 120 may be supported by the outer circumferential surface of the cleaner body 110. When the cover member 129 is formed to protrude from the cleaner body 110, the cover member 129 may be supported by a rear surface portion of the suction unit 120. According to the above-described structure, when the suction unit 120 collides with an obstacle and receives an impact from the obstacle, a portion of the impact is transferred to the cleaner body 110, so that the impact can be dispersed.

The suction unit 120 may be detachably coupled to the cleaner body 110. If the suction unit 120 is separated from the cleaner body 110, a mop module (not shown) may be detachably coupled to the cleaner body 110, in replacement of the separated suction unit 120. Therefore, when a user intends to remove dust of a floor, the user may mount the suction unit 120 to the cleaner body 110. When the user intends to clean the floor, the user may mount the mop module to the cleaner body 110.

When the suction unit 120 is mounted to the cleaner body 110, the mounting may be guided by the cover members 129. That is, the cover members 129 are disposed to cover the outer circumferential surface of the cleaner body 110, so that a relative position of the suction unit 120 with respect to the cleaner body 110 can be determined.

The sensing unit 130 is disposed at the cleaner body 110. As shown in these figures, the sensing unit 130 may be disposed at one side of the cleaner body 110, at which the suction unit 120 is located, i.e., the front of the cleaner main body 110. The sensing unit 130 may be formed to protrude from top and side surfaces of the cleaner body 110, and an upper end 134b1 of the sensing unit 130 is formed at a position protruding upward from the top surface of the cleaner body 110.

The sensing unit 130 may be disposed to overlap with the suction unit 120 in the top-bottom direction of the cleaner body 110. The sensing unit 130 is disposed above the suction unit 120, to sense an obstacle or geographic feature at the front thereof such that the suction unit 120 located foremost of the robot cleaner 100 does not collide with the obstacle or geographic feature.

The sensing unit 130 is configured to additionally perform another sensing function except such a sensing function. This will be described in detail later.

A dust container accommodation part 113 is provided in the cleaner body 110, and the dust container 140 that separates and collects dust in sucked air is detachably coupled to the dust container accommodation part 113. As shown in these figures, the dust container accommodation part 113 may be formed at the other side of the cleaner body 110, i.e., the rear of the cleaner body 110. The dust container accommodation part 113 has a shape opened rearward and upward from the cleaner body 110. The dust container accommodation part 113 may be formed in a shape dented toward rear and front sides of the cleaner body 110.

A portion of the dust container 140 is accommodated in the dust container accommodation part 113. In this case, the other portion of the dust container 140 may be formed to protrude toward the rear of the cleaner body 110 (i.e., in a reverse direction R opposite to the forward direction F).

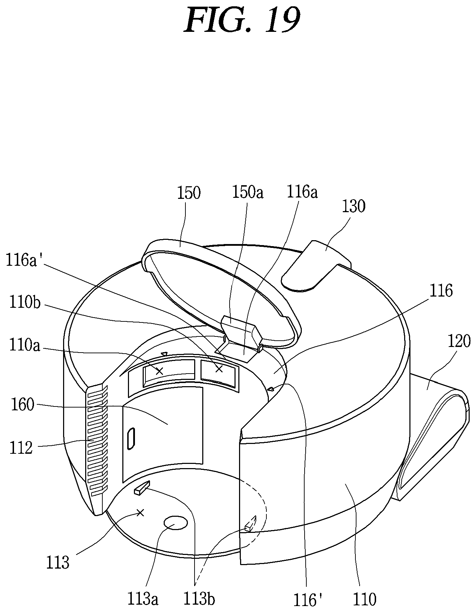

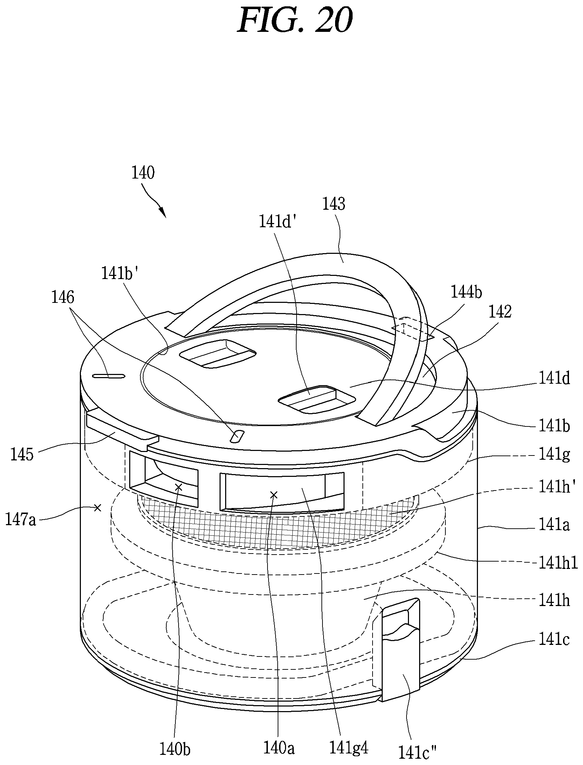

An entrance 140a (see FIG. 20) through which air containing dust is introduced and an exit 140b (see FIG. 20) through which air having dust separated therefrom is discharged are formed in the dust container 140. When the dust container 140 is mounted in the dust container accommodation part 113, the entrance 140a and the exit 140b are configured to respectively communicate with a first opening 110a (see FIG. 19) and a second opening 110b (see FIG. 19), which are formed in an inner wall of the dust container accommodation part 113.

An inhalation flow path in the cleaner body 110 corresponds to a flow path from an introduction port 110' communicating with a communication part 120b" to the first opening 110a, and an exhaust flow path in the cleaner body 110 corresponds to a flow path from the second opening 110b to an exhaust port 112.

According to such a connection relationship, air containing dust, which is introduced through the suction unit 120, is introduced into the dust container 140 via the inhalation flow path in the cleaner body 110, and the air and the dust are separated from each other by passing through at least one cyclone provided in the dust container 140. The dust is collected in the dust container 140, and the air is discharged from the dust container 140 and then finally discharged to the outside through the exhaust port 112 by passing through the exhaust flow path in the cleaner body 110.

Hereinafter, the sensing unit 130 will be described in more detail.

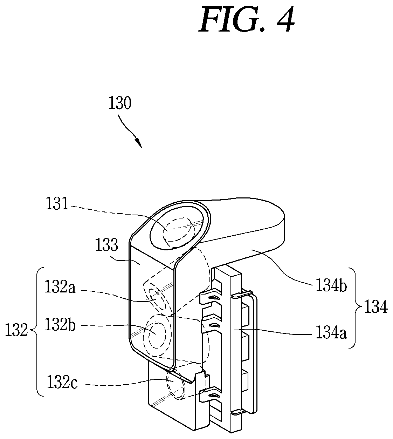

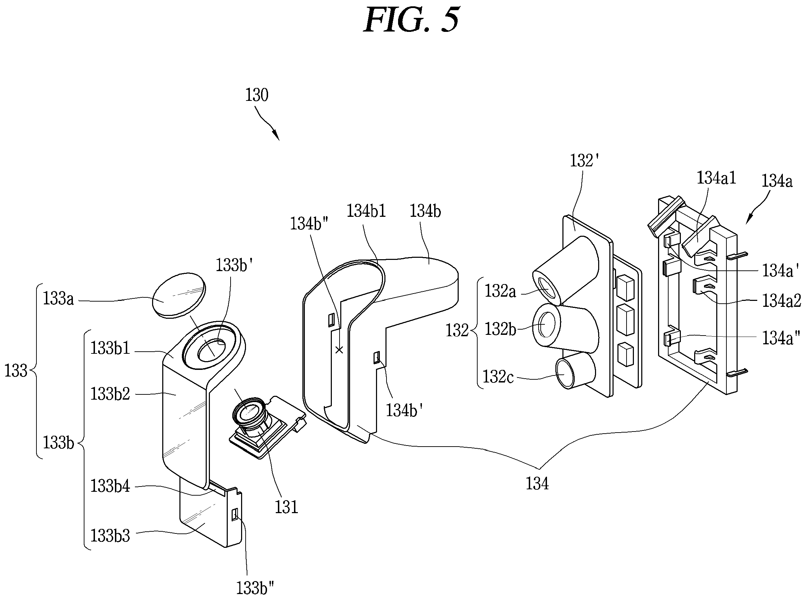

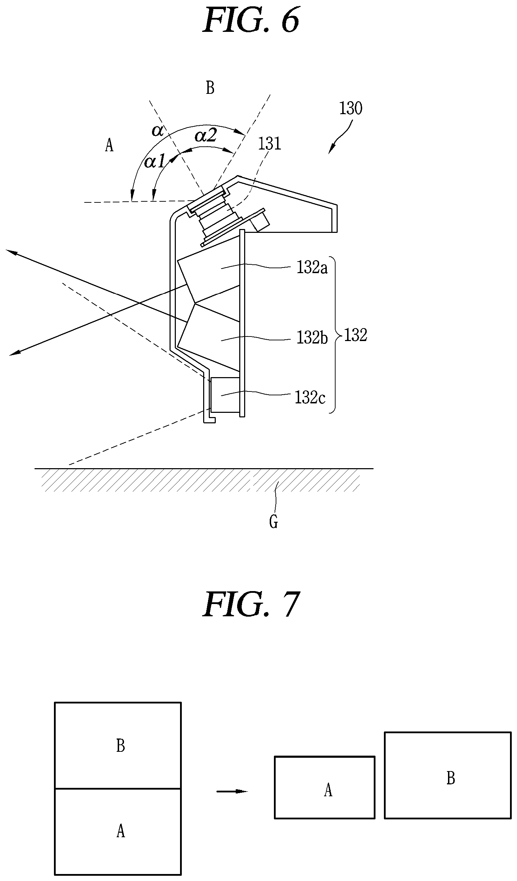

FIG. 4 is a view illustrating the sensing unit 130 shown in the robot cleaner 100 of FIG. 1. FIG. 5 is an exploded perspective view of the sensing unit 130 shown in FIG. 4. FIG. 6 is a view conceptually illustrating a section of the sensing unit 130 shown in FIG. 4. For reference, in FIG. 6, some components are excluded or briefly illustrated for convenience of description.

Referring to FIGS. 4 to 6, the sensing unit 130 includes a first sensing part 131 and a second sensing part 132.

The first sensing part 131 is disposed inclined with respect to one surface of the cleaner body 110 to simultaneously photograph front and upper parts of the cleaner body 110. An image acquisition part may be used as the first sensing part 131. Here, the one surface of the cleaner body 110 may become a floor surface as a surface parallel to the floor, or the top or side surface of the cleaner body 110, and the first sensing part 131 may be disposed inclined at 30 degrees with respect to the top surface of the cleaner body 110.

The first sensing part 131 may be located at an upper corner portion at which the top and side surfaces of the cleaner body 100 meet each other. In these figures, it is illustrated that the first sensing part 131 is disposed at a middle upper corner portion of the cleaner body 110 to be inclined with respect to each of the top and side surfaces of the cleaner body 110.

As the first sensing part 131 is disposed inclined within a range of acute angles with respect to the one surface of the cleaner body 110, the sensing part 131 is configured to simultaneously photograph the front and upper parts of the cleaner body 110.

FIG. 7 illustrates a concept that an image photographed by the first sensing part 131 is divided into a front image A and an upper image B.

Referring to FIG. 7, the front image A and the upper image B, which are photographed by the first sensing part 131, may be divided based on an angle α of view in the top-bottom direction (i.e., the vertical direction) of the first sensing part 131. That is, an image corresponding to a portion α1 of the angle α of view in the photographed image A+B may be recognized as the front image A, and an image corresponding to the other portion α2 of the angle α of view in the photographed image A+B may be recognized as the upper image B. As shown in FIG. 6, the angle α of view may be an obtuse angle.

The front image A photographed by the first sensing part 131 is used to monitor the front in real time. For example, when the robot cleaner 100 is used for household purposes, the front image A photographed by the first sensing part 131 may be used to monitor a trespass into an empty house or to provide an image of the inside of the house to an electronic device (e.g., a mobile terminal possessed by the user) through a remote connection.

When the front image A photographed by the first sensing part 131 is used to monitor a trespass into the empty house, the following control may be performed. The controller may compare fronts images A photographed by the first sensing part 131 at a preset time interval. When the front images A are different from each other, the controller may generate a control signal. The control may be performed in a state in which the cleaner body 110 is stopped. The control signal may be an alarm sound output signal or a transmission signal that provides a notification, a photographed front image, and the like to the electronic device through the remote connection.

When the front image A photographed by the first sensing part 131 is used to provide an image of the inside of the house to the electronic device, the following control may be performed. If an image request signal is received from the electronic device through the remote connection, the controller may separate a front image A from an image photographed by the first sensing part 131 and transmit the front image A to the electronic device. The controller may be configured to move to a specific position by controlling driving of the wheel unit 111 and then transmit a front image at the corresponding position to the electronic device. To this end, as shown in FIG. 6, the angle α of view may have a range in which the first sensing part 131 can photograph the upper image B including a ceiling.

The upper image B photographed by the first sensing part 131 is used to generate a map of a traveling area and sense a current position in the traveling area. For example, when the robot cleaner 100 is used for household purposes, the controller may generate a map of a traveling area, using a boundary between a ceiling and a side surface in the upper image B photographed by the first sensing part 131, and sense a current position in the traveling area, based on main feature points of the upper image B.

The controller may use not only the upper image B but also the front image A together with the upper image B so as to generate a map of a traveling area and sense a current position in the traveling area.

The second sensing part 132 is disposed in a direction intersecting the first sensing part 131 to sense an obstacle or geographic feature located at the front thereof. In these figures, it is illustrated that the second sensing part 132 is disposed long along the top-bottom direction at the side surface of the cleaner body 110.

The second sensing part 132 includes a first pattern irradiating part 132a, a second pattern irradiating part 132b, and an image acquisition part 132c.

The first pattern irradiating part 132a is configured to irradiate a beam having a first pattern toward a front lower side of the robot cleaner 100, and the second pattern irradiating part 132b is configured to irradiate a beam having a second pattern toward a front upper side of the robot cleaner 100. The first pattern irradiating part 132a and the second pattern irradiating part 132b may be disposed in a line along the top-bottom direction. In these figures, it is illustrated that the second pattern irradiating part 132b is disposed under the first pattern irradiating part 132a.

The image acquisition part 132c is configured to photograph, in a preset photographing area, the beams having the first and second patterns, which are respectively irradiated by the first pattern irradiating part 132a and the second pattern irradiating part 132b. The preset photographing area includes an area from the floor to an upper end of the robot cleaner 100. Thus, the robot cleaner 100 can sense an obstacle at the front thereof, and it is possible to prevent the robot cleaner 100 from colliding with or being inserted into an obstacle at an upper portion thereof.

The preset photographing area may be, for example, an area within an angle of view of 105 degrees in the top-bottom direction (i.e., the vertical direction), an angle of view of 135 degrees in the left-right direction (i.e., the horizontal direction), and the front of 25 m. The preset photographing area may be changed depending on various factors such as installation positions of the first and second pattern irradiating parts 132a and 132b, irradiation angles of the first and second pattern irradiating parts 132a and 132b, and a height of the robot cleaner 100.

The first pattern irradiating part 132a, the second pattern irradiating part 132a, and the image acquisition part 132c may be disposed in a line along the top-bottom direction of the cleaner body 110. In these figures, it is illustrated that the image acquisition part 132c is disposed under the second pattern irradiating part 132b.

The first pattern irradiating part 132a is disposed to be downwardly inclined with respect to the side surface of the cleaner body 110, and the second pattern irradiating part 132b is disposed to be upwardly inclined with respect to the side surface of the cleaner body 110.

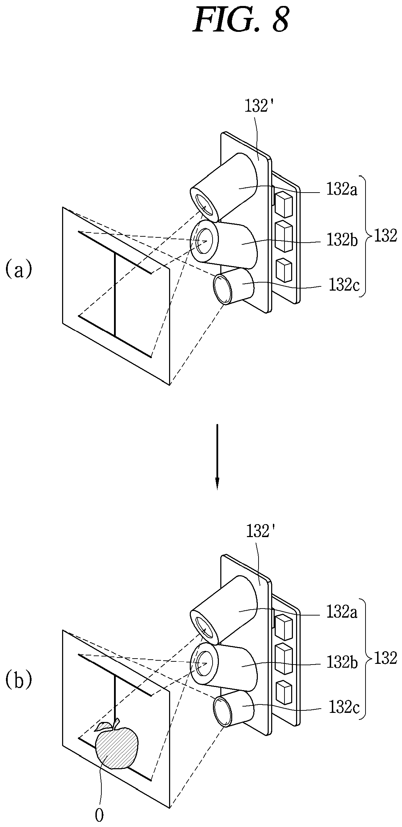

FIG. 8 illustrates a concept that an obstacle is sensed by the second sensing part 132 shown in FIG. 4.

First, referring to (a) of FIG. 8, the first pattern irradiating part 132a and the second pattern irradiating part 132b are configured to respectively irradiate beams having first and second patterns that have a shape extending at least one direction. In this figure, it is illustrated that the first pattern irradiating part 132a irradiates linear beams intersecting each other and the second pattern irradiating part 132b irradiates a single linear beam. Accordingly, a bottommost beam is used to sense an obstacle at a bottom portion, a topmost beam is used to sense an obstacle at a top portion, and a middle beam between the bottommost beam and the topmost beam is used to sense an obstacle at a middle portion.

For example, as shown in (b) of FIG. 8, when an obstacle O is located at the front, the bottommost beam and a portion of the middle beam may be interrupted or distorted by the obstacle O. When such interruption or distortion is sensed, the image acquisition part 132c transmits an obstacle sensing signal to the controller.

If the obstacle sensing signal is received, the controller determines that the obstacle O is located, and controls the driving of the wheel unit 111. For example, the controller may apply a driving force in the opposite direction to the main wheels 111a such that the robot cleaner 100 moves rearward. Alternatively, the controller may apply the driving force to only any one of the main wheels 111a such that the robot cleaner 100 rotates, or apply the driving force to both the main wheels 111a in directions different from each other.

Hereinafter, the concept that the obstacle is sensed by the second sensing part 132 will be described in more detail.

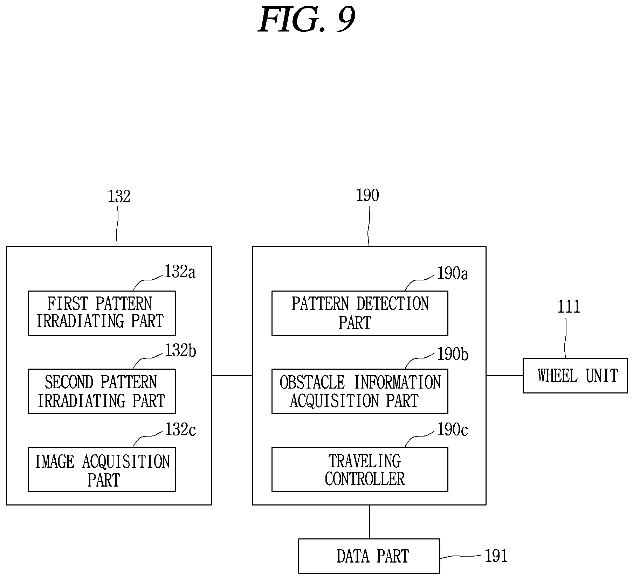

FIG. 9 is a block diagram illustrating main parts related to avoidance of an obstacle using the second sensing part 132.

The robot cleaner 100 includes the wheel unit 111, a data part 191, a second sensing part 132, and a controller 190 that controls overall operations.

The controller 190 may include a traveling controller 190c that controls the wheel unit 111. As a left main wheel 111a and a right main wheel 111a are independently driven by the traveling controller 190c, the robot cleaner 100 travels while moving straight or rotating. To this end, a driving motor of which driving is controlled according to a control command of the traveling controller 190c may be connected to each of the left main wheel 111a and the right main wheel 111a.

Also, the controller 190 may include a pattern detection part 190a that detects a pattern by analyzing data input from the second sensing part 132 and an obstacle information acquisition part 190b that determines whether an obstacle exists from the detected pattern.

The pattern detection part 190a detects beam patterns P1 and P2 from an image (acquired image) acquired by the image acquisition part 132. The pattern detection part 190a may detect features of points, lines, surfaces, and the like with respect to predetermined pixels constituting the acquired image, and detect the beam patterns P1 and P2 or points, lines, surfaces, and the like, which constitute the beam patterns P1 and P2.

The obstacle information acquisition part 190b determines whether an obstacle exists, based on the patterns detected from the pattern detection part 190a, and determine a shape of the obstacle.

The data part 191 stores reference data that stores an acquired image input from the second sensing part 132 and allows the obstacle information acquisition part 190b to determine whether an obstacle exists. The data part 191 stores obstacle information on a sensed obstacle. Also, the data part 191 stores control data for controlling an operation of the robot cleaner 100 and data corresponding to a cleaning mode of the robot cleaner 100. The data part 191 stores a map generated or received from the outside.

In addition, the data part 191 stores data readable by a microprocessor, and may include a hard disk driver (HDD), a solid state disk (SSD), a silicon disk drive (SDD), a ROM, a RAM, a CD-ROM, a magnetic tape, a floppy disk, and an optical data storage device.

The second sensing part 132 includes the first pattern irradiating part 132a, the second pattern irradiating part 132b, and the image acquisition part 132c.

The second sensing part 132 is installed at a front side of the cleaner body 110. In the second sensing part 132, the first and second pattern irradiating parts 132a and 132b irradiate beams P1 and P2 having first and second patterns toward the front of the robot cleaner 100, and the image acquisition part 132c acquires an image by photographing the irradiated beams having the patterns.

The controller 190 stores an acquired image in the data part 191, and the pattern detection part 190a extracts a pattern by analyzing the acquired image. That is, the pattern detection part 190a extracts a beam pattern obtained by irradiating a beam having a pattern, which is irradiated from the first pattern irradiating part 132a or the second pattern irradiating part 132b, onto a floor or obstacle. The obstacle information acquisition part 190b determines whether an obstacle exists, based on the extracted beam pattern.

The controller 190 determines whether an obstacle exists through an acquired image input from the second sensing part 132 and controls the wheel unit 111 to travel while avoiding the obstacle by changing a moving direction or traveling route.

When a cliff exists in the vicinity of the robot cleaner 100, the robot cleaner 100 may fall from the cliff. Therefore, the controller 190 may sense the cliff through an acquired image, and reconfirm whether the cliff exists through a cliff sensor 124, to control the traveling of the robot cleaner 100 such that the robot cleaner 100 does not fall from the cliff. When it is determined that a cliff has exists, the controller 190 may control the wheel unit 111 to travel along the cliff by determining a change in beam pattern through an acquired image.

In addition, when the traveling of the robot cleaner 100 is restricted due to a plurality of obstacles existing in an area having a certain size or less, the controller 190 may determine whether the robot cleaner 100 is in a restricted situation, and set an escape mode such that the robot cleaner 100 escape the restricted situation.

The controller 190 may allow the robot cleaner 100 to escape the restricted situation by setting an escape route, based on information on each obstacle around the robot cleaner 100 according to whether a currently set mode is a fundamental mode or a fast cleaning mode.

For example, in the fundamental mode, the controller 190 may generate a map on a peripheral area by acquiring information on all obstacles around the robot cleaner 100 and then set an escape route. In the fast cleaning mode, the controller 190 may set an escape route by determining whether the robot cleaner 100 is to enter according to a distance between sensed obstacles.

The controller 190 determines a distance between sensed obstacles by analyzing a beam pattern of an acquired image with respect to the sensed obstacles, and determines that the robot cleaner 100 is to travel and enter when the distance between the obstacles is a certain value or more, to control the robot cleaner 100 to travel. Thus, the controller 190 enables the robot cleaner 100 to escape a restricted situation.

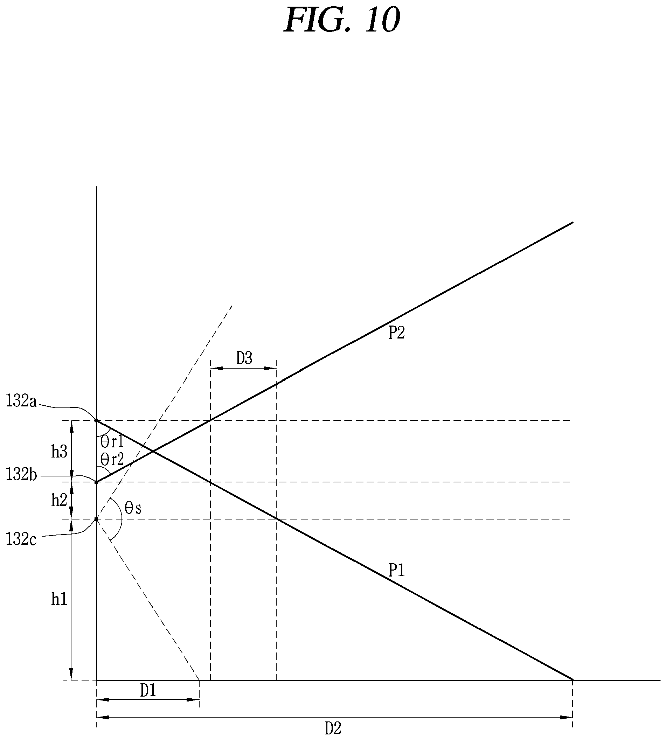

FIG. 10 is a view illustrating a beam irradiation range of the first and second pattern irradiating parts 132a and 132b and an obstacle detection range of the image acquisition part 132c.

Referring to FIG. 10, each of the first and second pattern irradiating parts 132a and 132b may include a beam source and an optical pattern projection element (OPPE) that generates a beam having a predetermined pattern as a beam irradiated from the beam source is transmitted therethrough.

The beam source may be a laser diode (LD), a light emitting diode (LED), or the like. Since a laser beam has characteristics of monochromaticity, straightness, and connectivity, the laser diode is superior to other beam sources, and thus can accurately measure a distance. In particular, since an infrared or visible ray has a large variation in accuracy of distance measurement depending on factors such as a color and a material of an object, the laser diode is preferably used as the beam source.

A pattern generator may include a lens and a diffractive optical element (DOE). Beams having various patterns may be irradiated according to a configuration of a pattern generator provided in each of the first and second pattern irradiating parts 132a and 132b.

The first pattern irradiating part 132a may irradiate a beam P1 having a first pattern (hereinafter, referred to as a first pattern beam) toward a front lower side of the cleaner body 110. Therefore, the first pattern beam P1 may be incident onto a floor of a cleaning area.

The first pattern beam P1 may be formed in the shape of a horizontal line. Also, the first pattern beam P1 may be formed in the shape of a cross pattern in which a horizontal line and a vertical line intersect each other.

The first pattern irradiating part 132a, the second pattern irradiating part 132b, and the image acquisition part 132c may be vertically disposed in a line. In this exemplary embodiment, it is illustrated that the image acquisition part 132c is disposed under the first pattern irradiating part 132a and the second pattern irradiating part 132b. However, the present disclosure is not necessarily limited thereto, and the image acquisition part 132c may be disposed above the first pattern irradiating part 132a and the second pattern irradiating part 132b.

In an exemplary embodiment, the first pattern irradiating part 132a may sense an obstacle located lower than the first pattern irradiating part 132a by downwardly irradiating the first pattern beam P1 toward the front, and the second pattern irradiating part 132b may be located at a lower side of the first pattern irradiating part 132a to upwardly irradiate a beam P2 having a second pattern (hereinafter, referred to as a second pattern beam) toward the front. Therefore, the second pattern beam P2 may be incident onto an obstacle or a certain portion of the obstacle, which is located higher than at least the second pattern irradiating part 132b from the floor of the cleaning area.

The second pattern beam P2 may have a pattern different from that of the first pattern beam P1, and be preferably configured to include a horizontal line. Here, the horizontal line is not necessarily a consecutive line segment but may be formed as a dotted line.

Meanwhile, a horizontal irradiation angle of the first pattern beam P1 irradiated from the first pattern irradiating part 132a (i.e., an angle made by both ends of the first pattern beam P1 and the first pattern irradiating part 132a) may be preferably defined in a range of 130 degrees to 140 degrees, but the present disclosure is not necessarily limited thereto. The first pattern beam P1 may be formed in a shape symmetrical with respect to the front of the robot cleaner 100.

Like the first pattern irradiation part 132a, a horizontal irradiation angle of the second pattern irradiating part 132b may be preferably defined in a range of 130 degrees to 140 degrees. In some exemplary embodiments, the second pattern irradiating part 132b may irradiate the second pattern beam P2 at the same horizontal irradiation angle as the first pattern irradiating part 132a. In this case, the second pattern beam P2 may also be formed in a shape symmetrical with respect to the front of the robot cleaner 100.

The image acquisition part 132c may acquire an image of the front of the cleaner body 110. In particular, the pattern beams P1 and P2 are shown in an image acquired by the image acquisition part 132c (hereinafter, referred to as an acquired image). Hereinafter, images of the pattern beams P1 and P2 shown in the acquired image are referred to as beam patterns. Since the beam patterns are substantially images formed as the pattern beams P1 and P2 incident onto an actual space are formed in an image sensor, the beam patterns are designated by the same reference numerals as the pattern beams P1 and P2. Therefore, images corresponding to the first pattern beam P1 and the second pattern beam P2 are referred to as a first beam pattern P1 and a second beam pattern P2, respectively.

The image acquisition part 132 may include a digital image acquisition part that converts an image of a subject into an electrical signal and then converts the electrical signal into a digital signal to be stored in a memory device. The digital image acquisition part may include an image sensor (not shown) and an image processing part (not shown).

The image sensor is a device that converts an optical image into an electrical signal, and is configured as a chip having a plurality of photo diodes integrated therein. An example of the photo diode may be a pixel. Electric charges are accumulated in each of the pixels by an image formed in the chip through a beam passing through a lens. The electric charges accumulated in the pixel are converted into an electric signal (e.g., a voltage). A charge coupled device (CCD), a complementary metal oxide semiconductor (CMOS), and the like are well known as the image sensor.

The image processing part generates a digital image, based on an analog signal output from the image sensor. The image processing part may include an AD converter that converts an analog signal into a digital signal, a buffer memory that temporarily records digital data according to the digital signal output from the AD converter, and a digital signal processor (DSP) that generates a digital image by processing the data recorded in the buffer memory.

The pattern detection part 190a may detect features of points, lines, surfaces, and the like with respect to predetermined pixels constituting an acquired image, and detect the beam patterns P1 and P2 or points, lines, surfaces, and the like, which constitute the beam patterns P1 and P2.

For example, the pattern detection part 190a may extract a horizontal line constituting the first beam pattern P1 and a horizontal line constituting the second beam pattern P2 by extracting line segments configured as pixels brighter than surroundings are consecutive.

However, the present disclosure is not limited thereto. Since various techniques of extracting a pattern having a desired shape from a digital image have already been well known in the art, the pattern detection part 190a may extract the first beam pattern P1 and the second beam pattern P2 using these techniques.

The first pattern irradiating part 132a and the second pattern irradiating part 132b are vertically disposed to be spaced apart from each other at a distance h3. The first pattern irradiating part 132a downwardly irradiates a first pattern beam, and the second pattern irradiating part 132b upwardly irradiates a second pattern beam, so that the first and second pattern beams intersect each other.

The image acquisition part 132c is disposed downward from the second pattern irradiating part 132b at a distance h2 to photograph an image of the front of the cleaner body 110 at an angle θs of view with respect to the top-bottom direction. The image acquisition part 132c is installed at a position spaced apart from the bottom surface at a distance h1. The image acquisition part 132c may be preferably installed at a position that does not interfere with the photographing of an image of the front, by considering the shape of the suction unit 120.

Each of the first pattern irradiating part 132a and the second pattern irradiating part 132b is installed such that a direction in which the direction of optical axes of lenses constituting each of the first pattern irradiating part 132a and the second pattern irradiating part 132b forms a certain irradiation angle.

The first pattern irradiating part 132a downwardly irradiates the first pattern beam P1 at a first irradiation angle θr1, and the second pattern irradiating part 132b upwardly irradiates the second pattern beam P2 at a second irradiation angle θr2. In this case, the first irradiation angle θr1 and the second irradiation angle θr2 are basically different from each other, but may be set equal to each other in some cases. The first irradiation angle θr1 and the second irradiation angle θr2 may be preferably set in a range of 50 degrees to 75 degrees, but the present disclosure is not necessarily limited thereto. For example, the first irradiation angle θr1 may be set to 60 degrees to 70 degrees, and the second irradiation angle θr2 may be set to 50 degrees to 55 degrees. The first irradiation angle θr1 and the second irradiation angle θr2 may be changed depending on the shape of the suction unit 120 and the height of an upper portion to be sensed.

When a pattern beam irradiated from the first pattern irradiating part 132a and/or the second pattern irradiating part 132b is incident onto an obstacle, the positions of the beam patterns P1 and P2 in an acquired image may be changed depending on a position at which the obstacle is distant from the first pattern irradiating part 132a. For example, when the first pattern beam P1 and the second pattern beam P2 are incident onto a predetermined obstacle, the first beam pattern P1 is displayed at a higher position in the acquired image as the obstacle is located closer to the robot cleaner 100. On the contrary, the second beam pattern P2 is displayed at a lower position in the acquired image as the obstacle is located more distant from the robot cleaner 100.

That is, data on distances to an obstacle, which correspond to rows (lines configured with pixels arranged in the lateral direction) constituting an image generated by the image acquisition part 132c, is stored in advance. If the beam patterns P1 and P2 detected in the image acquired through the image acquisition part 132c are detected on a predetermined row, a position of the obstacle may be estimated from data on a distance to the obstacle, which corresponds to the row.

The angle θs of view of the image acquisition part 132c may be set to a value of 100 degrees or more, and be preferably set to 100 degrees to 110 degrees. However, the present disclosure is not necessarily limited thereto.

In addition, the distance from the floor of the cleaning area to the image acquisition part 132c may be set to about 60 mm to 70 mm. In this case, the floor of the cleaning area in the image acquired by the image acquisition part 132c is shown posterior to D1 from the image acquisition part 132c, and D2 is a position at which the first beam pattern P1 is displayed on the floor shown in the acquired image.

When an obstacle is located in D2, an image in which the first beam pattern P1 is incident onto the obstacle may be acquired by the image acquisition part 132c. When the obstacle comes closer to the robot cleaner 100 than D2, the first optical pattern is displayed upward of a reference position refl, corresponding to the incident first pattern beam P1.

Here, the distance from the cleaner body 110 to D1 may be preferably 100 mm to 150 mm, and the distance from the cleaner body 110 to D2 may be preferably 180 mm to 280 mm. However, the present disclosure is not necessarily limited thereto. Meanwhile, D3 represents a distance from a most protruding portion of the front of the cleaner body 110 to a position at which the second pattern beam is incident. Since the cleaner body 110 senses an obstacle during traveling, D3 is a minimum of distance at which the cleaner body 110 can sense the obstacle at the front (upper portion) thereof without colliding with the obstacle. D3 may be set to about 23 mm to 30mm.

Meanwhile, when the first beam pattern P1 shown in an acquired image disappears in a normal state during traveling of the cleaner body 110 or when a portion of the first beam pattern is displayed in the acquired image, the obstacle information acquisition part 190b determines that a cliff exists in the vicinity of the robot cleaner 100.

When the first beam pattern P1 is not displayed in the acquired image, the obstacle information acquisition part 190b may recognize that a cliff exists at the front of the robot cleaner 100. When a cliff (e.g., stairs) exists at the front of the robot cleaner 100, the first pattern beam is not incident onto the floor, and therefore, the first beam pattern P1 disappears in the acquired image.

The obstacle information acquisition part 190b may determine that a cliff exists at the front distant by D2 from the cleaner body 110, based on a length of D2. In this case, when the first beam pattern P1 has a cross shape, the horizontal line disappears and only the vertical line is displayed. Therefore, the obstacle information acquisition part 190b may determine that a cliff exists.

In addition, when a portion of the first beam pattern is not displayed, the obstacle information acquisition part 190b may determine that a cliff exists at the left or right side of the robot cleaner 100. When a right portion of the first beam pattern is not displayed, the obstacle information acquisition part 190b may determine that a cliff exists at the right side of the robot cleaner 100.

Thus, based on detected information on a cliff, the obstacle information acquisition part 190b can control the wheel unit 111 to travel along a route on which the robot cleaner 100 does not fall from the cliff.

In addition, when a cliff exists at the front of the robot cleaner 100, the traveling controller 190c may again check whether a cliff exists, using a cliff sensor installed at a lower portion of the cleaner body 110, by moving forward by a certain distance, e.g., D2 or less. Thus, the robot cleaner 100 can primarily check whether a cliff exists through an acquired image and secondarily check whether a cliff exists through the cliff sensor.

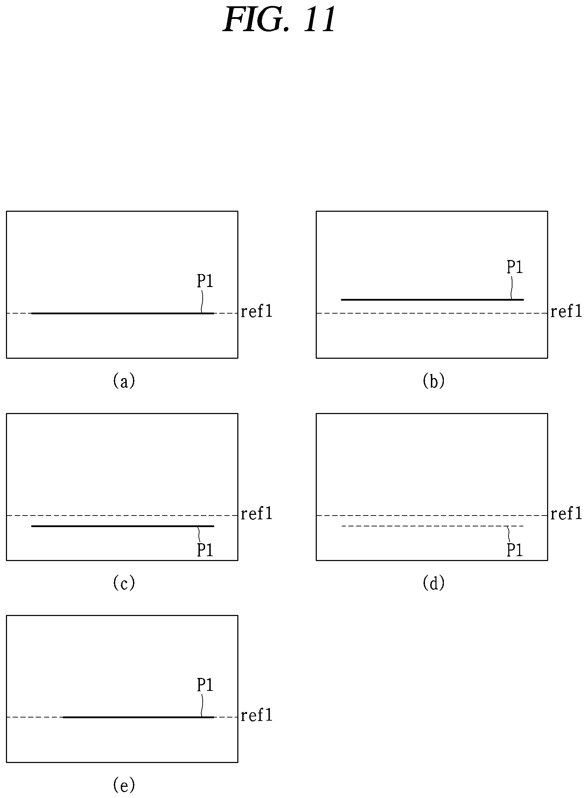

FIG. 11 is a view illustrating a beam having a first pattern, irradiated by the first pattern irradiating part 132a.

The pattern detection part 190a detects a first beam pattern or a second beam patter from an acquired image input from the image acquisition part 132c and applies the first or second beam pattern to the obstacle information acquisition part 190b.

The obstacle information acquisition part 190b analyzes the first or second beam pattern detected from the acquired image and compares a position of the first beam pattern with the reference position refl, thereby determining whether an obstacle exists.

As shown in (a) of FIG. 11, when the horizontal line of the first beam pattern P1 is located at the reference position refl, the obstacle information acquisition part 190b determines that a current state is a normal state. Here, the normal state is a state in which the floor is even and flat, and is a state in which the robot cleaner 100 can continuously travel as any obstacle does not exist at the front of the robot cleaner.

The second beam pattern P2 is incident onto an obstacle only when the obstacle exists at an upper portion of the front to be displayed in an acquired image. Therefore, the second beam pattern P2 is not generally displayed in the acquired image in the normal state.

As shown in (b) of FIG. 11, when the horizontal line of the first beam pattern P1 is located above the reference position refl, the obstacle information acquisition part 190b determines that an obstacle exists at the front.

If an obstacle is detected through the obstacle information acquisition part 190b as described above, the traveling controller 190c controls the wheel unit 111 to travel while avoiding the obstacle. Meanwhile, the obstacle information acquisition part 190b may determine the position and size of the sensed obstacle, corresponding to the positions of the first and second beam patterns P1 and P2 and whether the second beam pattern P2 has been displayed. In addition, the obstacle information acquisition part 190b may determine the position and size of the obstacle, corresponding to changes of the first and second beam patterns P1 and P2 displayed in the acquired image during traveling.

The traveling controller 190c controls the wheel unit 111 by determining whether the wheel unit 111 is to continuously travel with respect to the obstacle or to travel while avoiding the obstacle, based on information of the obstacle, which is input from the obstacle information acquisition part 190b. For example, when the height of the obstacle is lower than a certain height or less or when the cleaner body 110 is to enter into a space between the obstacle and the floor, the traveling controller 190c determines that the traveling of the wheel unit 111 is possible.

As shown in (c) of FIG. 11, the first beam pattern P1 may be displayed at a position lower than the reference position refl. When the first beam pattern P1 may be displayed at a position lower than the reference position refl, the obstacle information acquisition part 190b determines that a downhill road exists. In the case of a cliff, the first beam pattern P1 disappears, and therefore, the downhill road is distinguished from the cliff.

As shown in (d) of FIG. 11, the obstacle information acquisition part 190b determines that a cliff exists in a traveling direction when the first beam pattern P1 is not displayed.

As shown in (e) of FIG.11, when a portion of the first beam pattern P1 is not displayed, the obstacle information acquisition part 190b may determines that a cliff exists at the left or right side of the cleaner body 110. In this case, the obstacle information acquisition part 190b determines that a cliff exists at the left side of the cleaner body 110.

Meanwhile, when the first beam pattern P1 has a cross shape, an obstacle may be determined by considering both the position of the horizontal line and the length of the vertical line.

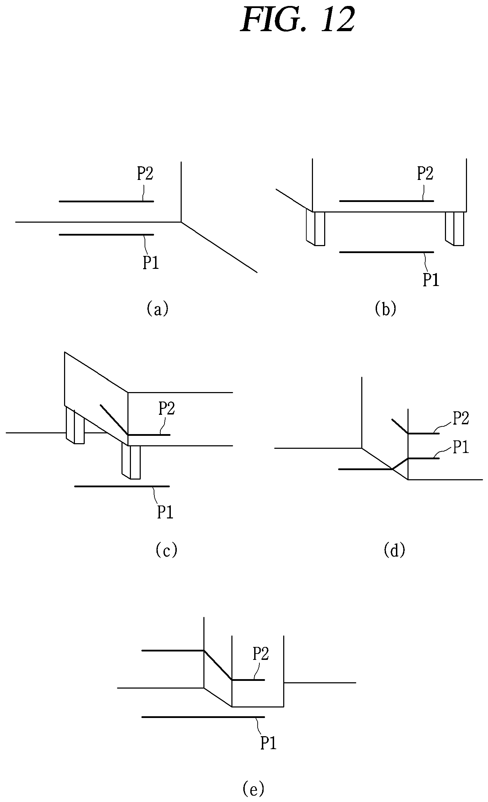

FIG. 12 is a conceptual view illustrating shapes of the first and second beam patterns P1 and P2 irradiated onto each obstacle for each shape of the obstacle.

As shown in FIG. 12, as beams irradiated from the first and second pattern irradiating parts 132a and 132b are incident onto an obstacle, so that beam patterns are shown in an acquired image, the obstacle information acquisition part 190b may determine the position, size, and shape of the obstacle.

As shown in (a) of FIG. 12, when a wall surface exists at the front during traveling of the cleaner body 110, a first pattern beam is incident onto a floor and a second pattern beam is incident onto the wall surface. Accordingly, the first beam pattern P1 and the second beam pattern P2 are displayed as two horizontal lines in an acquired image. In this case, when a distance of the cleaner body 110 to the wall surface is longer than D2, the first beam pattern P1 is displayed at the reference position refl, but the second beam pattern P2 is also displayed together with the first beam pattern P1. Therefore, the obstacle information acquisition part 190b may determine that an obstacle exists.

Meanwhile, when the distance of the cleaner body 110 to the wall surface is less than D2, the first pattern beam is incident onto the wall surface instead of the floor. Therefore, the first beam pattern P1 is displayed at an upper side of the reference position refl, and the second beam pattern P2 is displayed at an upper side of the first beam pattern P1. Since the position of the second beam pattern P2 is displayed at a lower side as the second beam pattern P2 approaches the obstacle, the second beam pattern P2 is displayed at a lower side as compared with when the distance of the cleaner body 110 to the wall surface is longer than D2. Here, the second pattern beam P2 is displayed at an upper side as compared with the reference position refl and the first beam pattern P1.

Accordingly, the obstacle information acquisition part 190b can calculate a distance of the cleaner body 110 to the wall surface as an obstacle through the first beam pattern P1 and the second beam pattern P2.

As shown in (b) of FIG. 12, when an obstacle such as a bed or a dresser exists, the first beam pattern P1 and the second beam pattern P2 are incident as two horizontal lines onto a floor and an obstacle, respectively.

The obstacle information acquisition part 190b determines whether an obstacle exists, based on the first beam pattern P1 and the second beam pattern P2. The height of the obstacle may be determined based on a position of the second beam pattern P2 and a change of the second beam pattern P2, which occurs while the cleaner body 110 is approaching the obstacle. Accordingly, the traveling controller 190c controls the wheel unit 111 by determining whether the cleaner body 110 is to enter into a lower space of the obstacle.

For example, when an obstacle having a predetermined space formed from the floor, such as a bed in a cleaning area, is located, the traveling controller 190c may recognize the space, and preferably determine whether to pass through or avoid the obstacle by detecting the height of the space.

When it is determined that the height of the space is lower than that of the cleaner body 110, the traveling controller 190c may control the wheel unit 111 such that the cleaner body 110 travels while avoiding the obstacle. On the contrary, when it is determined that the height of the space is higher than that of the cleaner body 110, the traveling controller 190 may control the wheel unit 111 such that cleaner body 110 enters into or passes through the space.

Although the first beam pattern P1 and the second beam pattern P2 are displayed as two horizontal lines even in (a) of FIG. 12, a distance between the first beam pattern P1 and the second beam pattern P2 in (b) of FIG. 12 is different from that between the first beam pattern P1 and the second beam pattern P2 in (a) of FIG. 12. Therefore, the obstacle information acquisition part 190b may distinguish the difference. In (a) of FIG. 12, the position of the first beam pattern P1 is displayed higher than the reference position refl as the first beam pattern approaches the obstacle. However, as shown in (b) of FIG. 12, when an obstacle is located above the cleaner body 110, the first beam pattern P1 is displayed at the reference position refl and the position of the second beam pattern P2 is changed even when they approach the obstacle by a certain distance. Therefore, the obstacle information acquisition part 190b may distinguish the kind of the obstacle.

As shown (c) of FIG. 12, in the case of a corner of an obstacle such as a bed or dresser, as the first beam pattern P1 is irradiated as a horizontal line onto a floor, and the second beam pattern P2 is irradiated onto the corner of the obstacle. As the second beam pattern P2 is irradiated onto the corner of the obstacle, a portion of the second beam pattern P2 is displayed as a horizontal line, and the other portion of the second beam pattern P2 is displayed as an oblique line. Since the position of the second beam pattern P2 becomes higher as the second beam pattern P2 is more distant from the cleaner body 110, the second beam pattern P2 irradiated onto a side surface of the obstacle is displayed as an oblique line bent upward of the horizontal line irradiated onto a front surface of the obstacle.

As shown in (d) of FIG. 12, when the cleaner body 110 approaches a corner of a wall surface by a certain distance or more, a portion of the first beam pattern P1 is displayed as a horizontal line at an upper side of the reference position refl. As a portion of the second beam pattern P2 is irradiated onto a side surface of the corner, the portion of the second beam pattern P2 is displayed as an oblique line bent downward. As for a bottom surface, a portion of the second beam pattern P2 is displayed as a horizontal line at the reference position refl.

Meanwhile, a portion of the second beam pattern P2 is displayed as a horizontal line as shown in (c) of FIG. 12, and a portion of the second beam pattern P2, which is irradiated onto the side surface of the corner, is displayed as an oblique line bent upward.

As shown in (e) of FIG. 12, in the case of an obstacle protruding from a wall surface, the first beam pattern P1 is displayed as a horizontal line as the reference position refl. A portion of the second beam pattern P2 is displayed as a horizontal line on a protruding surface, another portion of the second beam pattern P2 is displayed as an oblique line bent upward on a side surface of the protruding surface, and the other portion of the second beam pattern P2 is displayed as a horizontal line on the wall surface.

Accordingly, the obstacle information acquisition part 190b can determine the position, shape, and size (height) of an obstacle, based on the positions and shapes of first and second pattern beams.

Hereinafter, a detailed configuration of the sensing unit 130 will be described.

Referring to FIG. 5, the sensing unit 130 further includes a window part 133 and a case 134, in addition to the first sensing part 131 and the second sensing part 132.

The window part 133 is disposed to cover the first and second sensing parts 131 and 132, and has transparency. Here, the transparency is a property that at least one portion of an incident beam is transmitted, and has a concept including translucency.

The window part 133 may be formed of a synthetic resin material or a glass material. When the window part 133 has the translucency, the material may be formed to have the translucency. Alternatively, the material may have the transparency, and a film attached to the material may have the translucency.

The case 134 is mounted to the cleaner body 110, and is configured to fix the first and second sensing parts 131 and 132 and the window part 133. As shown in this figure, the case 134 is configured to accommodate at least one portion of the window part 133. The case 134 may be formed of a synthetic resin material or a metallic material, and has opaqueness.

As shown in this figure, the case 134 may include a mounting frame 134a and the cover frame 134b.

The mounting frame 134a provides a space in which the first and second sensing parts 131 and 132 are mounted and supported. To this end, the mounting frame 134a may be provided with a first mounting part 134a1 for mounting the first sensing part 131 thereto and a second mounting part 134a2 for mounting the second sensing part 132 thereto. A board 132' on which the first and second pattern irradiating parts 132a and 132b and the image acquisition part 132c are mounted may be mounted to the second mounting part 134a2. The second mounting part 134a2 may be disposed inclined with respect to the first mounting part 134a1.

The mounting frame 134a is provided with first and second fastening hooks 134a' and 134a" for allowing the mounting frame 134a to be fastened to the cover frame 134b and the window part 133. The first fastening hook 134a' is fastened to a fastening hole 134b' of the cover frame 134b, and the second fastening hook 134a" is fastened to a fastening hole 133b" of the window part 133. The mounting frame 134a may be mounted to the cleaner body 110.

The cover frame 134b is mounted to the cleaner body 110 in a state in which the cover frame 134b is coupled to the mounting frame 134a and accommodates at least one portion of the window part 133. The cover frame 134b may be formed in an 'L' shape to cover top and side surfaces of the cleaner body 110 at a corner of the cleaner body 110.

The upper end 134b1 of the cover frame 134b is located at an upper side of the first sensing part 131, and may be formed inclined to have a sharp shape. According to the above-described shape, although the robot cleaner 100 is inserted into furniture or a gap during traveling thereof, the robot cleaner 100 can easily escape from the furniture or gap, and the first and second sensing parts 131 and 132 can be protected by the upper end 134b1 located upward of the first and second sensing parts 131 and 132. **In** this figure, a case where the upper end 134b1 is formed at an end portion of a hole 134b" which will be described later is illustrated as an example.

The first sensing part 131 and at least one portion of the second sensing part 132 may be accommodated in the hole 134b" formed inside the cover frame 134b. **In** this figure, it is illustrated that the first sensing part 131 and the first and second pattern irradiating parts 132a and 132b of the second sensing part 132 are accommodated in the hole 134b".

The window part 133 may include a first window 133a and a second window 133b.

The first window 133a is formed of a transparent material, and is disposed to cover the first sensing part 131. The second window 133b has translucency, and is disposed to cover the second sensing part 132. As shown in this figure, a through-hole 133b' may be formed at a portion of the second window part 133b, which corresponds to the first sensing part 131, and the first window 133a may be disposed to cover the through-hole 133b'.

As the first sensing part 131 is formed of a transparent material, images at the front and upper parts of the cleaner body 110 can be clearly photographed. Further, as the second window 133b has translucency, the first pattern irradiating part 132a, the second pattern irradiating part 132b, and the image acquisition part 132c on a rear surface of the second window 133b are not well seen when viewed with the naked eye from the outside, so that a neat appearance can be realized.

The second window 133b may be divided in a first part 133b1, a second part 133b2, an extension part 133b4, and a third part 133b3.

The first part 133b1 is a part having the through-hole 133b', and is disposed inclined with respect to the top surface of the cleaner body 110. The first window 133a mounted in the through-hole 133b' is disposed to cover the first sensing part 131.

The second part 133b2 downwardly extends in an inclined shape from the first part 133b1, and is disposed to cover the first and second pattern irradiating parts 132a and 132b. In this exemplary embodiment, it is illustrated that the second part 133b2 downwardly extends in parallel to the side surface of the cleaner body 110.

The extension part 133b4 downwardly extends from the second part 133b2, and is covered by the cover frame 134b. As shown in this figure, the extension part 133b4 may downwardly extend toward the inside of the second part 133b2. In other words, the extension part 133b4 may be disposed upwardly inclined with respect to the third part 133b3 not to interfere with the angle of view in the top-bottom direction of the image acquisition part 132c. Similarly, a portion of the cover frame 134b, which covers the extension part 133b4, is disposed inclined not to interfere with the angle of view in the top-bottom direction of the image acquisition part 132c.

The third part 133b3 downwardly extends from the extension part 133b4 to protrude outward of the cover frame 134b, and is disposed to cover the image acquisition part 132c. The third part 133b3 may downwardly extend in parallel to the second part 133b2 along the side surface of the cleaner body 110.

Hereinafter, the suction unit 120 will be described in more detail.

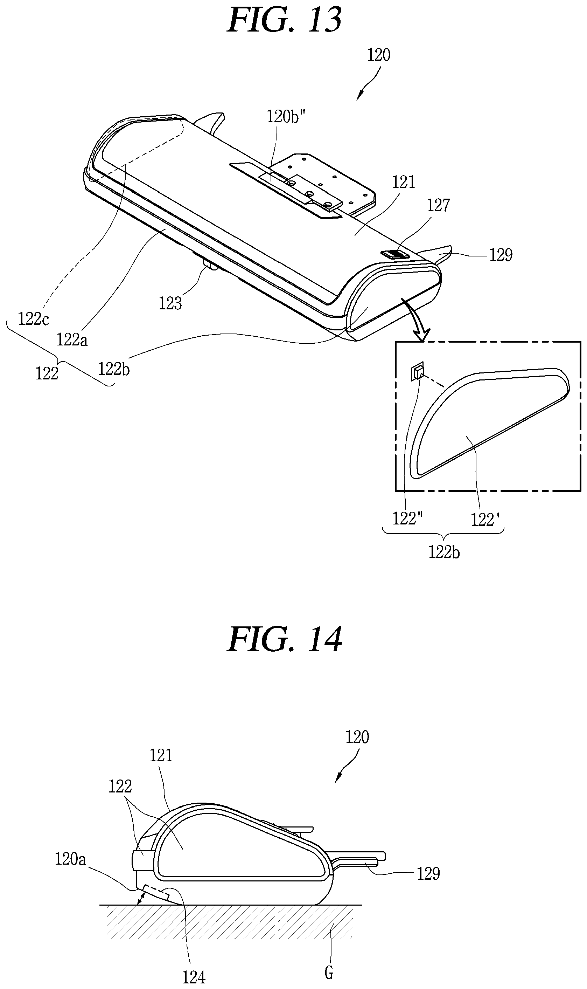

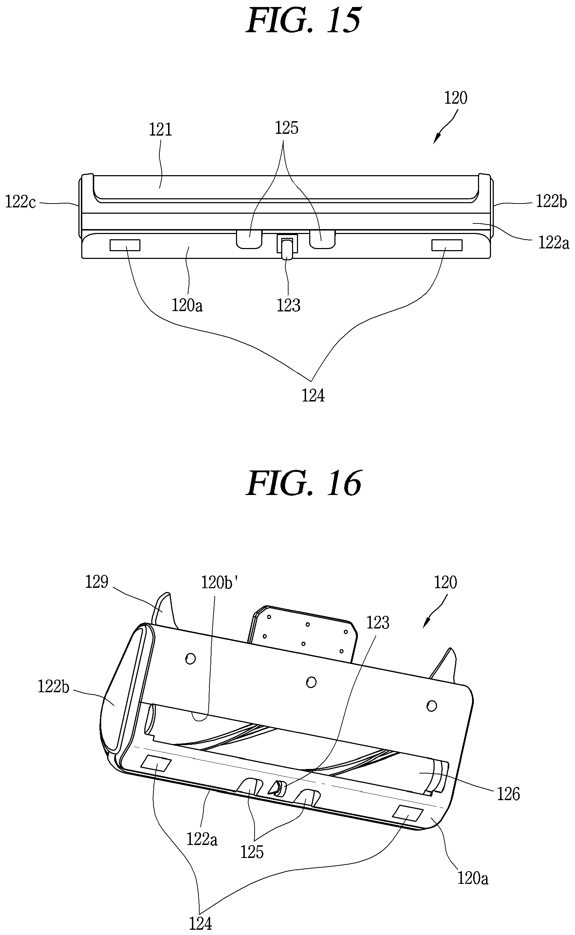

FIG. 13 is a view illustrating the suction unit 120 shown in FIG. 1. FIG. 14 is a side view of the suction unit 120 shown in FIG. 13. FIG. 15 is a front view of the suction unit 120 shown in FIG. 13. FIG. 16 is a view illustrating a bottom portion of the suction unit 120 shown in FIG. 13.

In this exemplary embodiment, when the suction unit 120 has a shape protruding from the cleaner body 110, it is highly likely that the suction unit 120 will collide with an obstacle as long as a separate sensing unit is not provided to the suction unit 120. The sensing unit 130 provided to the cleaner body 110 senses an obstacle at the front of the suction unit 120. However, when an obstacle exists in a blind spot that the sensing unit 130 does not sense, a physical collision may occur between the robot cleaner 100 and the obstacle. When the physical collision occurs, the robot cleaner 100 is to move rearward or change a direction so as to avoid the obstacle. To this end, it is first required to sense the physical collision between the robot cleaner 100 and the obstacle.

The suction unit 120 includes a case 121 and a bumper switch 122 that senses the physical collision.

The case 121 forms an appearance of the suction unit 120, and includes an inhalation port 120b' that sucks air containing dust, and the communication part 120b" communicating with the inhalation flow path in the cleaner body 110. At least one portion of the case 121 may be transparently formed such that the inside of the suction unit 120 is viewed.

The bumper switch 122 is disposed at at least one surface of the case 121. When the bumper switch 122 in contact with an obstacle, the bumper switch 122 is pressurized to transmit a contact signal to the controller.

The bumper switch 122 may be disposed to surround the case 121. In these figures, it is illustrated that a front bumper switch 122a is provided at a front side of the case 121, and side bumper switches 122b and 122c are provided at both left and right sides of the case 121, respectively.

According to the above-described configuration, it is possible to sense not only a physical collision with an obstacle located at the front of the suction unit 120 but also a physical collision of an obstacle located on a side surface of the suction unit 120. Thus, the sensing range of a physical collision with an obstacle can be increased.

Referring back to FIG. 2, it can be seen that the side bumper switches 122b and 122c are disposed to protrude further than virtual extension lines respectively in contact with both sides of the cleaner body 110. That is, the side bumper switches 122b and 122c may be disposed to protrude further than both the sides of the cleaner body 110 in side directions, respectively.

In this case, when an obstacle is located on a side surface of the robot cleaner 100, the side bumper switch 122b or 122c collides with the obstacle earlier than the cleaner body 110, so that the obstacle can be effectively sensed.

The bumper switch 122 includes a bumper 122' and a switch 122".

The bumper 122' is a part mounted to the case 121 to be exposed to the outside, and is pressurized when it is in contact with an obstacle to be movable inward.

An elastic member (not shown) that pressurizes the bumper 122' to the outside may be disposed at the inside of the bumper 122', so that the bumper 122' is returned to the original state when the bumper 122' is separated from the obstacle. The elastic member may be supported by each of the bumper 122' and the case 121.

The switch 122" is disposed at the inside of the bumper 122' to generate an electrical signal by being pressurized when the bumper 122' is moved inward. A microswitch known in the art may be used as the switch 122".

If a contact signal with an obstacle is transmitted through the bumper switch 122, the controller determines that the suction unit 120 has collided with the obstacle to control the driving of the wheel unit 111. For example, the controller may apply a driving force in the opposite direction to the main wheels 111a such that the robot cleaner 100 moves rearward. Alternatively, the controller may apply a driving force to only any one of the main wheels 111a or apply a driving force in different directions to both the main wheels 111a such that the robot cleaner 100 rotates. In the above, it has been described that the bumper switch 122 is configured to be divided into the front bumper switch 122a and the side bumper switches 122b and 122c, but the present disclosure is not limited thereto. The bumper switch 122 may be formed in a ' 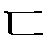 ' shape to cover the front and left and right surfaces of the case 121.

In this case, the bumper switch 122 is configured to be movable to a rear side (when a portion disposed at the front surface of the case 121 is in contact with an obstacle), a right side (when a portion disposed at the left surface of the case 121 is in contact with an obstacle), and a left side (when a portion disposed at the right surface of the case 121 is in contact with an obstacle).

As described above, if the bumper switch 122 that mechanically operates is provided in the suction unit 120, a collision with an obstacle can be more directly sensed as compared with when an electronic sensor (e.g., an acceleration sensor, a PSD sensor, etc.) is provided. Further, manufacturing cost can be reduced, and a circuit configuration can be simplified.

In addition, a more improved function of sensing an obstacle and changing a direction can be implemented by the combination of the bumper switch 122 and the sensing unit 130 provided to the cleaner body 110, which is described above.

Meanwhile, when the robot cleaner is located close to a step, cliff, or the like, which is rapidly lowered, a proper avoidance operation is required. If sensing of such a situation and control corresponding to the sensing are not performed, the robot cleaner 100 may be broken while falling from the step, or may never climb the step again.

To this end, the cliff sensor 124 that senses topography thereunder is disposed at a front end portion of a lower side of the suction unit 120. The cliff sensor 124 is provided with a light emitting part and a light receiving part, and measures a distance between the cliff sensor 124 and a floor G by measuring a time for which a beam irradiated onto the floor G from the light emitting part is received to the light receiving part. Therefore, when a rapidly lowered step exists at the front, the received time is rapidly increased. When a cliff exists at the front, any beam is not received to the light receiving part.

In these figures, it is illustrated that an inclined part 120a upwardly inclined with respect to the floor G is formed at the front end portion of the lower side of the suction unit 120, and the cliff sensor 124 is installed at the inclined part 120a to face the floor G. According to the above-described structure, the cliff sensor 124 is disposed inclined toward the floor G at a front lower side of the suction unit 120. Therefore, topography the front lower side of the suction unit 120 may be sensed by the cliff sensor 124.

Unlike the above-described disposal, the cliff sensor 124 may be disposed vertical to the floor G to sense topography immediately under the cliff sensor 124.

If it is sensed through the cliff sensor that the topography under the cliff sensor is lowered to a certain level or lower, the controller controls the driving of the wheel unit 111. For example, the controller may apply a driving force in the opposite direction to the main wheels 111a such that the robot cleaner 100 moves rearward in the reverse direction R. Alternatively, the controller may apply a driving force to only any one of the main wheels 111a or apply a driving force in different directions to both the main wheels 111a such that the robot cleaner 100 rotates.

The cliff sensor 124 may also be disposed at the bottom surface of the cleaner body 110. By considering the function of the cliff sensor 124, a cliff sensor provided to the cleaner body 110 may be preferably disposed adjacent to the rear of the cleaner body 110.

For reference, as the inclined part 120a is formed at the front end portion of the lower side of the suction unit 120, the robot cleaner 100 can easily climb a low threshold or obstacle. In addition, as shown in these figures, when an auxiliary wheel 123 is provided at the inclined part 120a, the climbing may be more easily performed. For reference, the auxiliary wheel 123 is omitted in FIG. 14 so as to describe the cliff sensor 124.

Meanwhile, since the robot cleaner 100 is wirelessly driven, it is required to charge the battery 180 provided in the cleaner body 110 during use of the robot cleaner 100. In order to charge the battery 180, a charging station (not shown) as a power supply is provided, and a charging terminal 125 configured to be connectable to the charging station is provided in the suction unit 120.

In these figures, it is illustrated that the charging terminal 125 is disposed at the inclined part 120a to be exposed to the front. The charging terminal 125 may be disposed between the cliff sensors 124 respectively disposed at both sides of the suction unit 120.

Meanwhile, a brush roller 126 may be provided in the suction unit 120 to permit effective suction of dust. The brush roller 126 is rotatable in the inhalation port 120b' to sweep dust and allow the dust to be introduced into the suction unit 120.

By considering the function of the brush roller 126, dust is stuck to the brush roller 126 as time elapses. Although there are needs for cleaning of the brush roller 126, the suction unit 120 is typically formed in a structure in which it is difficult to disassemble the suction unit 120. Therefore, it is substantially difficult to clean the brush roller 126.

In the present disclosure, there is disclosed as structure in which only the brush roller 126 can be separated and cleaned without entirely disassembling the suction unit 120.

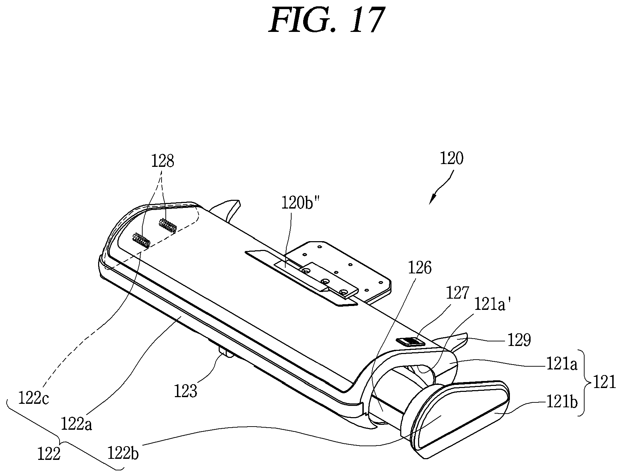

FIG. 17 is a view illustrating a concept that the brush roller 126 protrudes through a manipulation of a manipulation part 127 in the suction unit 120 shown in FIG. 13.

Referring to FIG. 17, the case 121 includes a main case part 121a and a cover case part 121b.

The main case part 121a is provided with the brush roller 126 configured to be rotatable therein, and an opening 121a' is formed at one side of the main case part 121a. The front bumper switch 122a is mounted at a front side of the main case part 121a, and any one of the side bumper switches 122b and 122c is mounted at the other side of the main case part 121a.

The cover case part 121b is detachably coupled to the main case part 121a to open/close the opening 121a' provided at the one side of the main case part 121a. The other of the side bumper switches 122b and 122c is mounted to the cover case part 121b.

According to the above-described structure, if the cover case part 121b is separated from the main case part 121a, the opening 121a' provided at the one side of the main case part 121a is exposed to the outside. Therefore, the brush roller 126 disposed in the main case part 121a may be exposed to the outside through the opening 121a'.

The manipulation part 127 through which locking of the cover case part 121b to the main case part 121a is released in manipulation thereof may be provided in the suction unit 120. The manipulation part 127 may be implemented in various types such as a slide type and a press type. In this figure, it is illustrated that the manipulation part 127 of the slide type is installed at the main case part 121a.

An elastic member 128 that elastically pressurizes the brush roller 126 may be provided inside the other side of the main case part 121. A leaf spring, a coil spring, and the like may be used as the elastic member 128.

In a state in which the elastic member 128 is pressurized by the brush roller 126 when the cover case part 121b is fastened to the main case part 121a, if the fastening is released by the manipulation of the manipulation part 127, the elastic member 128 is configured to pressurize the brush roller 126. In this case, as shown in this figure, the cover case part 121b may be in a state in which it is coupled to the brush roller 126.

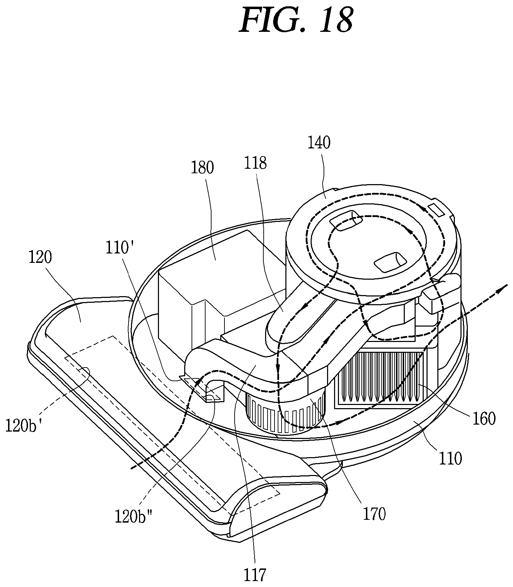

FIG. 18 is a conceptual view illustrating a flow of air inside the robot cleaner 100 shown in FIG. 1.

Referring to FIG. 18, air introduced into the suction unit 120 through the inhalation port 120b' of the suction unit 120 is introduced into the cleaner body 110 through the communication part 120b". For reference, dust (including foreign substances) is contained in air sucked through the suction unit 120.

The air introduced into the cleaner body 120 is introduced into the dust container 140. The inhalation flow path corresponds to a flow path continued from the introduction port 110' communicating with the communication part 120b" to the first opening 110a (see FIG. 19). The inhalation flow path may be formed as a duct, a peripheral instrument, or a combination of the duct and the peripheral instrument.

In this figure, it is illustrated that an inhalation duct 117 connects the introduction port 110' to the first opening 110a, thereby forming the inhalation flow path.

The communication part 120b" of the suction unit 120 may be disposed under a bottom surface of the front side of the cleaner body 110. In this case, the introduction port 110' is formed in the bottom surface of the front side of the cleaner body 110. In addition, as the dust container 140 is disposed at the rear of the cleaner body 110, a fan motor part 170 and the battery 180 are disposed at both left and right sides of the front of the dust container 140, respectively.

According to the above-described disposal, a front end portion of the inhalation duct 117 communicating with the introduction port 110' is formed to extend upward. In addition, the inhalation duct 117 extends to one side of the cleaner body 110 while avoiding the battery 180. In this case, the inhalation duct 117 may be disposed to pass over the fan motor part 170 disposed at the one side of the cleaner body 110.

The first opening 110a is formed in an upper inner circumferential surface of the dust container accommodation part 113 to communicate with the entrance 140a formed in an upper outer circumferential surface of the container 140. Therefore, the inhalation duct 117 is formed to extend upward toward the first opening 110a from the introduction portion 110'.

Air introduced into the dust container 140 passes through at least one cyclone in the dust container 140. Dust contained in the air is separated by the at least one cyclone to be collected in the dust container 140, and the air having the dust removed therefrom is discharged from the dust container 140.

Specifically, air forms a rotational flow in the dust container 140, and dust and air are separated from each other by a difference in centrifugal force between the air and the dust. The air is flowed into the exit 140 via the at least one cyclone by a suction force generated by the fan motor part 170. However, since an inertial force caused by the weight of the dust is larger than the suction force generated by the fan motor part 170, the dust is collected at a lower portion of the dust container 140 while gradually falling.

As shown in this figure, the introduction port 110' may be formed at the center of the bottom surface of the front side of the cleaner body 110. The entrance 140a of the dust container 140 may be formed opened in a tangential direction in an inner circumferential surface of the dust container 140 such that air is introduced in a lateral direction to naturally form a rotational flow. In the state in which the dust container 140 is accommodated in the dust container accommodation part 113, the entrance 140a may be located in a lateral direction of the cleaner body 110.

The air having the dust separated therefrom is discharged from the dust container 140 and then is finally discharged to the outside through the exhaust port 112 via the exhaust port in the cleaner body 110.

The exhaust flow path corresponds to a flow path from the second opening 110b (see FIG. 19) to the exhaust port 112. The exhaust flow path may be formed as a duct, a peripheral instrument, or a combination of the duct and the peripheral instrument.

In this figure, it is illustrated that the exhaust flow path is configured as a combination of an exhaust duct 118 that connects the second opening 110b to the fan motor port 170 and an internal instrument that guides the flow of air from the fan motor part 170 to the exhaust port 112.

The fan motor port 170 may be disposed adjacent to a central portion of the cleaner body 110 to reduce noise discharged to the outside. Corresponding to this, the second opening 110b may also be formed adjacent to the central portion of the cleaner body 110.

As shown in this figure, a front end portion of the exhaust duct 118 communicating with the second opening 110b and a rear end portion of the inhalation port 117 communicating with the first opening 110a may be disposed side by side at the same height.

Hereinafter, the dust container accommodation part 113, the dust container 140, and the dust container cover 150 will be described in more detail.

FIG. 19 is a view illustrating a state before the dust container 140 is mounted in the dust container accommodation part 113 in the robot cleaner 100 shown in FIG. 1.

Referring to FIG. 19, the dust container accommodation part 113 accommodating the dust container 140 therein is formed in the cleaner body 110. The dust container accommodation part 113 has a shape dented toward a front side from a rear side of the cleaner body 110, and is opened rearward and upward. The dust container accommodation part 113 may be defined by a bottom surface supporting the dust container 140 and an inner wall surrounding a portion of the outer circumference of the dust container 140.

A recessed part 116 dented from the top surface of the cleaner body 110 is formed along the outer circumference of the dust container accommodation part 113. The dust container cover 150 is accommodated in the dust container accommodation part 113 through rotation. At this time, the dust container cover 150 is disposed to simultaneously cover the top surface of the dust container 140 and the recessed part 116 (see FIG. 2). A portion of the dust container cover 150 is accommodated in the recessed part 116 in the state in which the dust container cover 150 is coupled to the dust container 140.

The first opening 110a and the second opening 110b are formed in the inner wall of the dust container accommodation part 113. The first opening 110a and the second opening 110b may be disposed at the same height. In this figure, it is illustrated that the first opening 110a and the second opening 110b are laterally formed adjacent to each other at an upper end of the inner wall of the dust container accommodation part 113.

In order to form the flow of air continued from the inhalation flow path to the exhaust flow path through the dust container 140, the first and second openings 110a and 110b are to be disposed to respectively communicate with the entrance 140a and the exit 140b. Also, in order to permit the communication, the dust container 140 is to be mounted at a regular position of the dust container accommodation part 113.

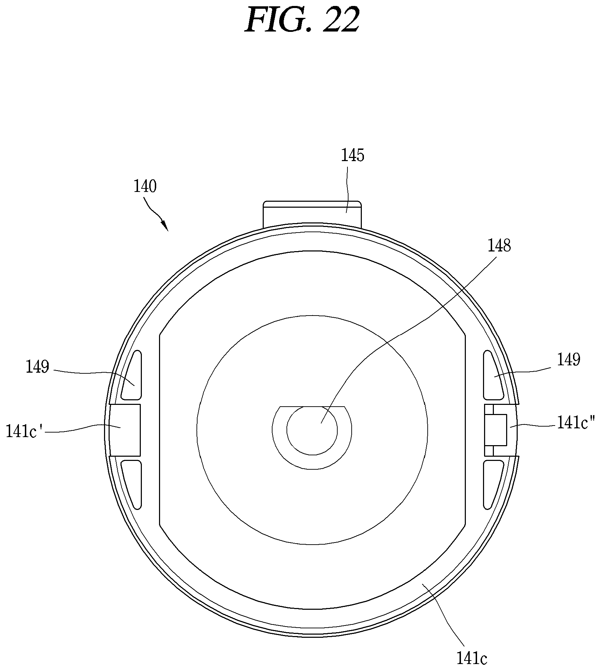

To this end, a mounting projection 113b is formed to protrude from the bottom surface of the dust container accommodation part 113, and a mounting groove 149 (see FIG. 22) corresponding to the mounting projection 113b is formed in a bottom surface of the dust container 140. The dust container 140 may be mounted at the regular position of the dust container accommodation part 113 as the mounting projection 113b is accommodated in the mounting groove 149.

The mounting projection 113b may be preferably formed at a position out of the dust container 140 such that the dust container 140 formed in a cylindrical shape is not rotated in a state in which it is accommodated in the dust container accommodation part 113. In this figure, it is illustrated that the mounting projection 113b is formed at both left and right sides with respect to the center of the dust container 140.

For reference, the positions of the mounting projection 113b and the mounting groove 149 may be reversed to each other. That is, the mounting projection may be formed to protrude from the bottom surface of the dust container 140, and the mounting groove may be formed in the bottom surface of the dust container accommodation part 113.

A protruding part 113a may be formed to protrude from the bottom surface of the dust container accommodation part 113, and a groove part 148 (see FIG. 22) corresponding to the protruding part 113a may be formed in the bottom surface of the dust container 140. The groove part 148 may be formed at the center of the dust container 140.

The dust container accommodation part 113 or the dust container 140 may be provided with gaskets 110a' and 110b' that maintain airtightness between the first opening 110a and the entrance 140a and airtightness between the second opening 110b and the exit 140b when the dust container 140 is mounted at the regular position of the dust container accommodation part 113. The gaskets 110a' and 110b' may be formed to surround the first opening 110a and the second opening 110b, or be formed to surround the entrance 140a and the exit 140b.

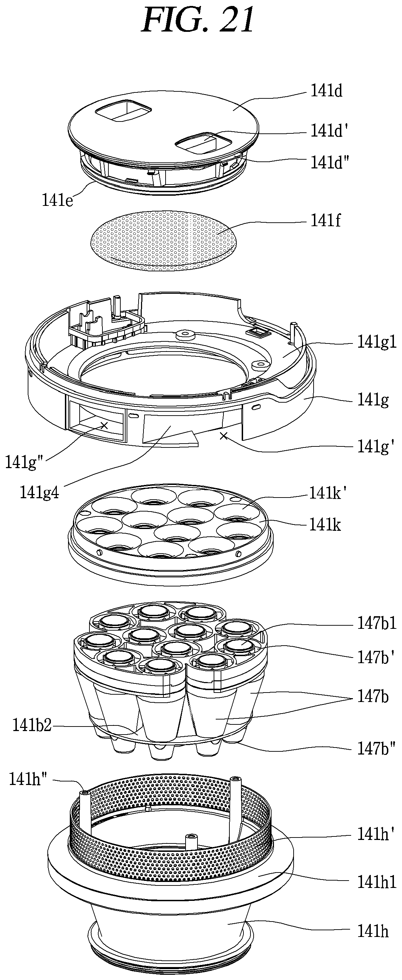

FIG. 20 is a view illustrating the dust container 140 shown in FIG. 1. FIG. 21 is an exploded perspective view illustrating main parts of the dust container 140 shown in FIG. 20.

As illustrated in FIGS. 20 and 21, the dust container 140 is accommodated in the dust container accommodation part 113 formed at the other side of the cleaner body 110, and is configured to collect dust filtered from sucked air. As shown in these figures, the dust container 140 may be formed in a cylindrical shape, and include an external case 141a defining appearance, an upper case 141b, an upper cover 141d, and a lower case 141c.

The external case 141a is formed in a cylindrical shape with both ends open so as to define a side appearance of the dust container 140. The dust container 140 is provided with the entrance 140a through which air containing dust is introduced, and the exit 140b through which dust-filtered air is discharged. This drawing exemplarily illustrates that the entrance 140a and the exit 140b are formed through a side surface of the external case 141a, respectively. The entrance 140a and the exit 140b may be arranged at the same height. This drawing exemplarily illustrates that the entrance 140a and the exit 140b are formed adjacent to each other at an upper end of the external case 141a.

At least one cyclone may be disposed in the external case 141a. For example, a first cyclone 147a filtering dust from air introduced through the entrance 140a and a second cyclone 147b disposed in the first cyclone 147a to filter fine dust may be disposed in the external case 141a.

The air containing the dust, introduced into the dust container 140 through the entrance 140a, flows along the first cyclone 147a as an empty space which is formed in an annular shape between the external case 141a and the inner case 141h. During the flow, relatively heavy dust is dropped down and collected and relatively light air is introduced into the inner case 141h through a mesh filter 141h' by a suction force. In this instance, fine dust may also be introduced into the inner case 141h together with the air.

The mesh filter 141h' is mounted in the inner case 141h to spatially partition inside and outside of the inner case 141h. The mesh filter 141h' is formed in a mesh shape or a porous shape such that the air can flow therethrough.

A criterion for distinguishing sizes of dust and fine dust may be decided by the mesh filter 141h'. Foreign materials as small as passing through the mesh filter 141h' may be classified as the fine dust, and foreign materials as great as failing to pass through the mesh filter 141h' may be classified as the dust.

Foreign materials and dust which have dropped down without passing through the mesh filter 141h' are collected in a first storage portion S1 located under the mesh filter 141h'. The first storage portion S1 may be called a foreign material-dust storage portion in the aspect of forming a space storing the foreign materials and dust therein. The first storage portion S1 is defined by the external case 141, the inner case 141h and the lower case 141c.

A skirt 141h1 may be provided at a lower side of the mesh filter 141h' in a manner of protruding along a circumference of the inner case 141h. The skirt 141h1 may restrict an introduction of air into the first storage portion S1 located under the skirt 141h1. This may result in preventing the foreign materials and dust collected in the first storage portion S1 from being dispersed and reversely flowing upward the skirt 141h1.

The second cyclone 147b is configured to separate fine dust from the air introduced therein through the mesh filter 141h'. The second cyclone 147b includes a cylindrical portion and a conical portion extending downwardly from the cylindrical portion. In the cylindrical portion, the air rotates due to a guide vane disposed in therein. On the other hand, in the conical portion, the fine dust and the air are separated from each other. As illustrated, the second cyclone 147b may be provided in plurality.

Also, the second cyclones 147b may be arranged within the first cyclone 147a in an up and down direction of the dust container 140. According to the arrangement, the height of the dust container 140 can be reduced with respect to the arrangement structure of the second cyclones on the first cyclone.

The air introduced into the inner case 141h is introduced into introduction openings 147b' on upper portions of the second cyclones 147b. To this end, an empty space in which the second cyclones 147b are not arranged within the inner case 147h is used as a path along which the air flows upward. The empty space may be formed by the adjacent cyclones 147b, or by the inner case 141h and the second cyclones 147b adjacent to the inner case 141h.

A vortex finder 147b1 through which air from which the fine dust is separated is discharged is provided on a center of the upper portion of each second cyclone 147b. With this structure, the introduction opening 147b' may be defined as an annular space between an inner circumference of the second cyclone 147b and an outer circumference of the vortex finder 147b1.

A guide vane extending in a spiral shape along an inner circumference is provided in the introduction opening 147b' of the second cyclone 147b. The guide vane allows air introduced in the second cyclone 147b through the introduction opening 147b' to be rotated.

The vortex finder 147b1 and the guide vane are arranged in the cylindrical portion of the second cyclone 147b.

Explaining in detail the flows of air and the fine dust introduced into the introduction opening 147b'. The fine dust gradually flows downward while spirally orbiting along the inner circumference of the second cyclone 147b, is discharged through a discharge opening 147b" and is finally collected in a second storage portion S2. The air which is relatively lighter than the fine dust is discharged through the upper vortex finder 147b1 by a suction force.

The second storage portion S2 may be called as a fine dust storage portion in the aspect of forming a storage space of the fine dust. The second storage portion S2 is a space defined by an inside of the inner case 141h and the lower case 141c.

A cover 141k is arranged on the top of the second cyclones 147b. The cover 141k is disposed to cover the introduction openings 147b' of the second cyclones 147b with a predetermined interval.

The cover 141k is provided with communication holes 141k' corresponding to the vortex finders 147b1. The cover 141k may be disposed to cover the inner case 141h except for the vortex finders 147b1.

Meanwhile, a partition plate 141b2 is installed on outer circumferences of the second cyclones 147b. The partition plate 141b2 partitions a space such that the air introduced into the inner case 141h through the mesh filter 141h' is not mixed with the fine dust discharged through the discharge opening 147b". That is, the air passed through the mesh filter 141h' flows above the partition plate 141b2 and the fine dust discharged through the discharge opening 147b" is collected below the partition plate 141b2.

As illustrated, the discharge opening 147b" of the second cyclone 147b has a shape penetrating through the partition plate 141b2. The partition plate 141b2 may be formed integral with the second cyclone 147b, or may be mounted on the second cyclone 147b after being produced as a separate member.

A flow separation member 141g is provided on an inner upper portion of the external case 141a. The flow separation member 141g separates a flow of air introduced through the entrance 140a of the dust container 140 from a flow of air discharged through the exit 140a of the dust container 140.

The upper case 141b is disposed to cover the flow separation member 141g, and the lower case 141c is disposed to cover a lower portion of the external case 141a.

The flow separation member 141g, the upper case 141b, the upper cover 141d and the filter 141f will be described later.

Since the dust container 140 is configured to be detachably coupled to the dust container accommodation part 113, a handle 143 may be provided to the dust container 140 such that the dust container 140 is easily detached from the dust container accommodation part 113. The structure disclosed in this exemplary embodiment will be described. The handle 143 is hinge-coupled to the upper case 141b to be rotatable. A handle accommodation part 142 having the handle 143 accommodated therein is formed in the upper case 141b.

In a state in which the dust container cover 150 is coupled to the dust container 140 to cover the dust container 140, the handle 143 may be pressurized by the dust container cover 150 to be accommodated in the handle accommodation part 142. In a state in which the dust container cover 150 is separated from the dust container 140, the handle 143 may protrude from the handle accommodation part 142. To this end, the upper case 141b may be provided with an elastic part (not shown) that elastically pressurizes the handle 143.

A locking hook 145 may be formed to protrude from the upper case 141b. The locking hook 145 is formed at the front of the upper case 141b. Here, the front of the upper case 141b means a direction toward the front of the cleaner body 110 when the dust container 140 is mounted at the regular position of the dust container accommodation part 113.

The locking hook 145 is accommodated in an accommodation groove 116a formed in the recessed part 116 of the cleaner body 110. The locking hook 145 may have a shape protruding from an outer circumferential surface of the upper case 141b to be bent downward. A step 116a' is formed in the accommodation groove 116a, and the locking hook 145 may be configured to be locked to the step 116a'.

FIG. 22 is a bottom view of the dust container 140 illustrated in FIG. 20.

The lower case 141c may be rotatably coupled to the external case 141a by a hinge part 141c'. A locking member 141c" provided to the lower case 141c is detachably coupled to the external case 141a, to allow the lower case 141c to be fixed to the external case 141a when the locking member 141c" is coupled to the external case 141 and to allow the lower case 141c to be rotatable with respect to the external case 141a when the coupling is released.

The lower case 141c is coupled to the external case 141a to form a bottom surface of the first storage portion S1 and the second storage portion S2. When the lower case 141c is rotated by a hinge portion 141c' to simultaneously open the first storage portion S1 and the second storage portion S2, the dust and the fine dust may simultaneously be discharged.

The hinge part 141c' and the locking member 141c" may be provided at positions opposite to each other with the center of the lower case 141c, which is interposed therebetween. When the dust container 140 is mounted at the regular position of the dust container accommodation part 113, the hinge part 141c' and the locking member 141c" may be covered by the inner wall of the dust container accommodation part 113 not to be exposed to the outside.

The mounting groove 149 corresponding to the mounting projection 113b is formed in a bottom surface of the lower case 141c. As shown in FIG. 21, the mounting groove 149 may be formed at a position adjacent to the hinge part 141c' and the locking member 141c".

In addition, the groove part 148 corresponding to the protruding part 113a may be formed in the bottom surface of the lower case 141c. The groove part 148 may be formed at the center of the dust container 140.

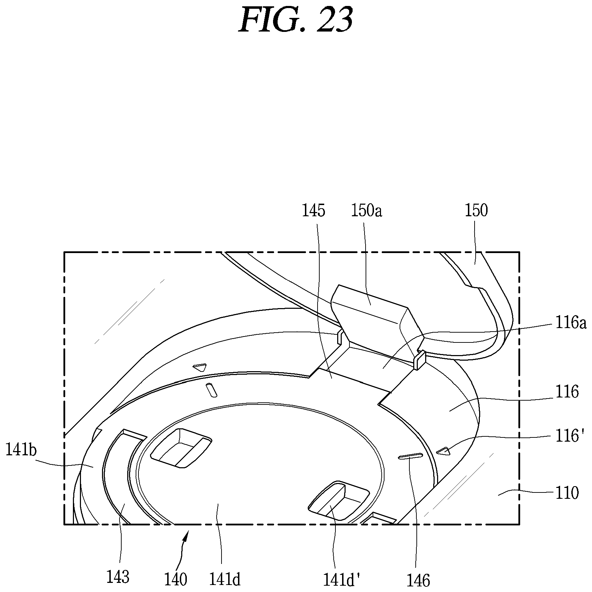

FIG. 23 is a view illustrating a state in which the dust container 140 is mounted in the dust container accommodation part 113 shown in FIG. 19.

Referring to FIG. 23, in a state in which the dust container 140 is not mounted in the dust container accommodation part 113, the dust container cover 150 may be disposed upwardly inclined by a hinge part 150a that provide an elastic pressurizing force to an upper side of the dust container cover 150. Therefore, the dust container 140 may be moved downwardly inclined at a rear upper side of the dust container accommodation part 113 to be accommodated in the dust container accommodation part 113.

If the dust container 140 is accommodated at the regular position of the dust container accommodation part 113, the locking hook formed to protrude from the outer circumference of the dust container 140 is accommodated in the accommodation groove 116a formed in the recessed part 116 of the cleaner body 110. The accommodation groove 116a has a shape dented relatively further than the recessed part 116.

Accordingly, the step 116a' is formed in the accommodation groove 116a. The step 116a' is inserted into the inside of the locking hook 145 to be locked when the locking hook 145 is moved in a lateral direction. In the state in which the dust container cover 150 is coupled to the dust container 140, the duct container cover 150 is disposed to cover the locking hook 145.

In the state in which the dust container 140 is accommodated in the dust container accommodation part 113, a top surface of the upper case 141b may form the same plane as the recessed part 116.

An alignment mark 146 may be formed at an upper portion of the dust container 140, and a guide mark 116' corresponding to the alignment mark 146 may be formed at the recessed part 116, so that the locking hook 145 can be accommodated at the regular position of the accommodation groove 116a. In this figure, it is shown that the alignment mark 146 is engraved in the upper case 141b and the guide mark 116' is engraved in the recessed part 116.

The accommodation groove 116a may be formed to extend long toward the front of the cleaner body 110. In the state in which the dust container cover 150 is coupled to the dust container 140, the hinge part 150a of the duct container cover 150 may be accommodated in the accommodation groove 116a.

As described above, the locking hook 145 is locked to the step 116a' of the accommodation groove 116a, so that the dust container 140 is restricted from being moved in the lateral direction in the dust container accommodation part 113.

In addition, as described above, the mounting projection 113b of the dust container accommodation part 113 is inserted into the mounting groove 149 formed in the dust container 140. In this case, the dust container 140 is also restricted from being moved in the lateral direction in the dust container accommodation part 113.

Thus, the dust container 140 cannot be separated from the dust container accommodation part 113 except when the dust container 140 is moved upward. In the state in which the dust container cover 150 is fastened to the dust container 140 to cover the dust container 140, the dust container 140 is also restricted from being moved upward. Thus, the dust container 140 cannot be separated from the dust container accommodation part 113.

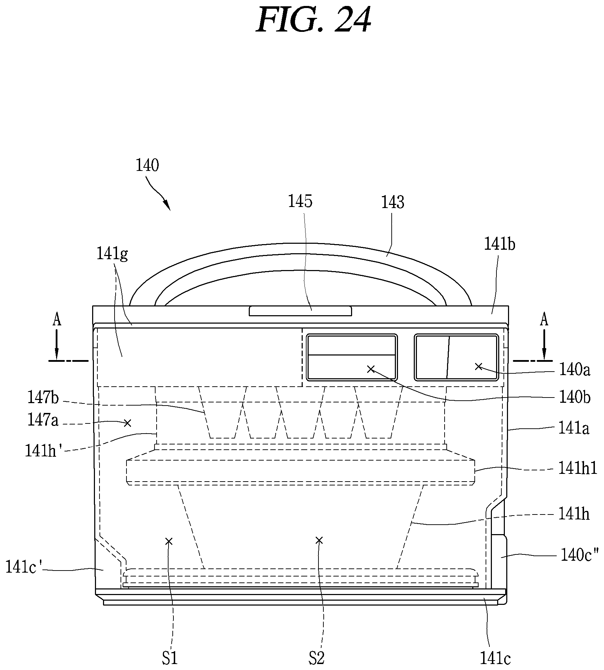

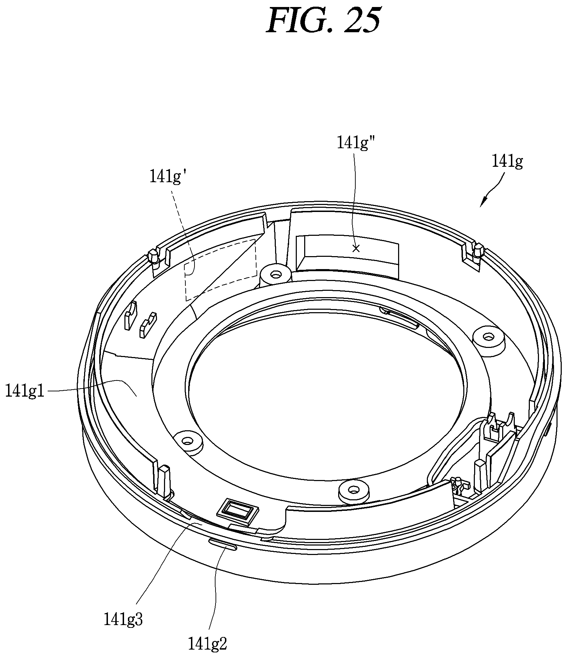

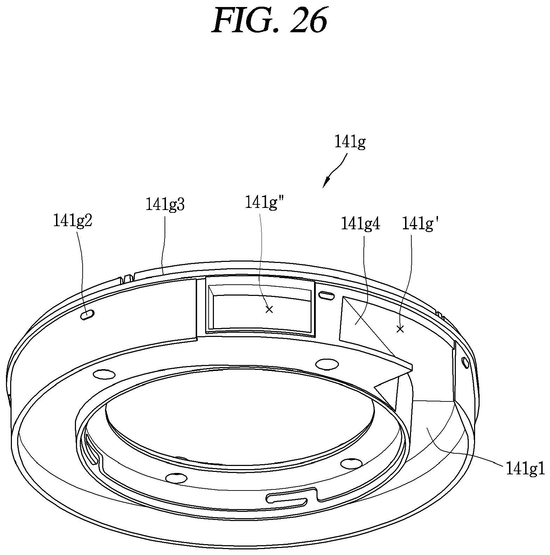

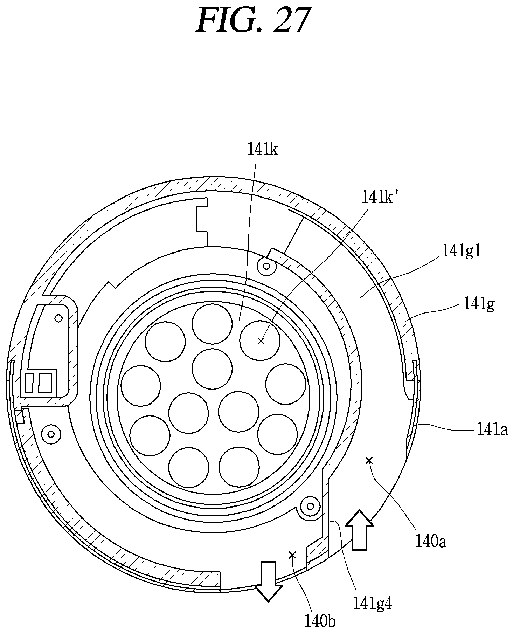

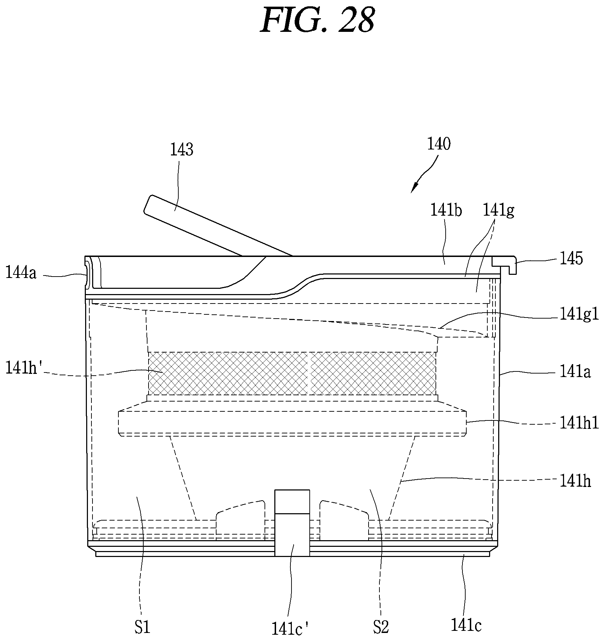

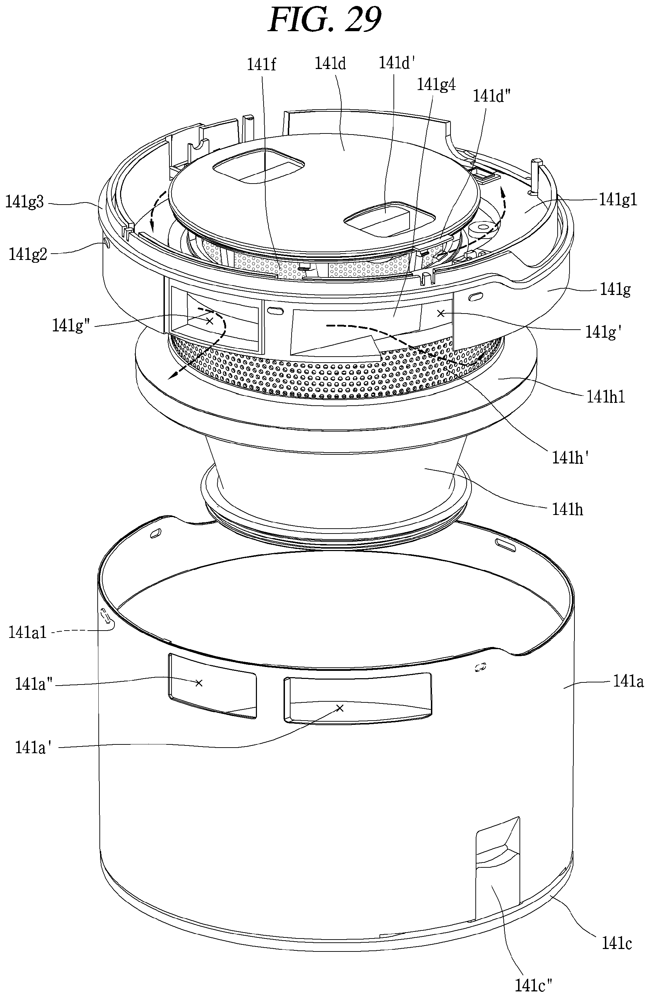

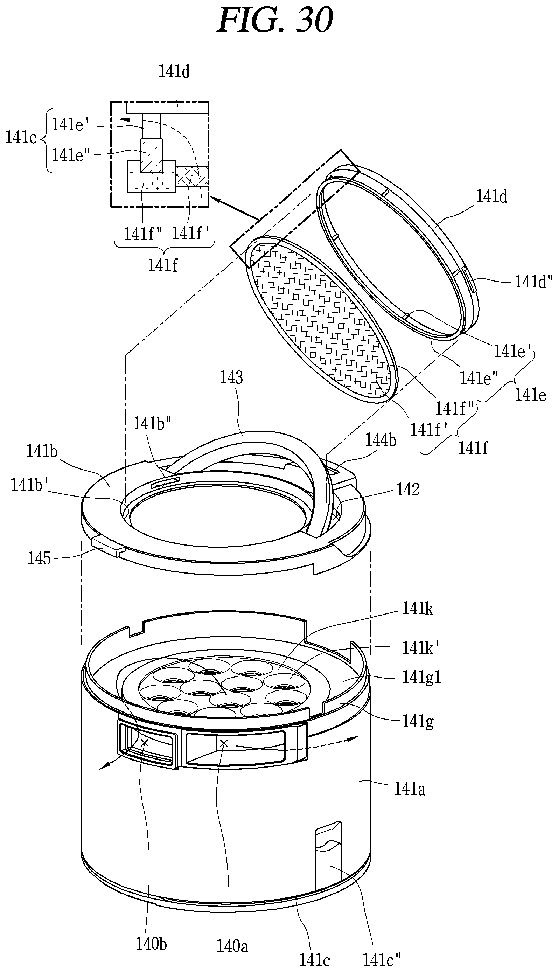

FIG. 24 is a front view of the dust container 140 shown in FIG. 20. FIGS. 25 and 26 are perspective views of the flow separation member 141g illustrated in FIG. 24, viewed from different directions. In addition, FIG. 27 is a sectional view taken along the line A-A illustrated in FIG. 24, FIG. 28 is a left side view of the dust container 140 illustrated in FIG. 20. To help understanding the flow of air within the dust container 140, FIG. 29 illustrates the dust container 140 illustrated in FIG. 20 excluding the upper case 141b, and FIG. 30 illustrates a state in which the upper case 141b and the upper cover 141d are separated from the dust container 140 shown in FIG. 20.

Referring to FIGS. 24 to 30 in conjunction with FIG. 20, the upper cover 141d is configured to open/close an upper opening 141b' of the dust container 140. In this exemplary embodiment, it is illustrated that the upper opening 141b' is formed in the upper case 141b, and the upper cover 141d is detachably coupled to the upper case 141b to open/close the upper opening 141b'. The upper opening 141b' is disposed to overlap with the cover 141k.

The upper cover 141d is provided with manipulation parts 141d' that allows the upper cover 141d to be fastened to the upper case 141b and allow the fastening to be released. The manipulation parts 141d' may be respectively formed at both left and right sides of the upper cover 141d, to permit pressing manipulation in directions opposite to each other, i.e., inward and returning to the original state by an elastic force.

The upper cover 141d is provided with fixing projections 141d" withdrawn or retracted from the outer circumference of the upper cover 141d in linkage with the manipulation of the manipulation part 141d. When the pressing manipulation of the manipulation parts 141d' is performed, the fixing projections 141d" are retracted into accommodation parts formed in the upper cover 141d not to protrude from the outer circumference of the upper cover 141d. If the manipulation parts 141d' are turned to the original state by the elastic force, the fixing projections 141d" protrude from the outer circumference of the upper cover 141d.

A fixing groove 141b" having the fixing projection 141d" inserted and fixed thereinto is formed in an inner surface of the upper case 141b, which forms the upper opening 141b'. The fixing groove 141b" may be formed at a position corresponding to each of the fixing projections 141d", so that the fixing grooves 141b" are opposite to each other. Alternatively, the fixing groove 141b" may be formed in a loop shape to extend along the inner surface of the upper case 141b. In this case, it is advantageous that the degree of freedom in installing the fixing projections 141d" increases.

The flow separation member 141g that separate the flow of the air introduced through the entrance 140a from the flow of the air discharged toward the exit 140a, and guides the flows is provided in the dust container 140. This drawing illustrates that the flow separation member 141g is coupled to an upper end portion at an inner side of the external case 141a.

In more detail, first and second holes 141a' and 141a" corresponding to the entrance 140a and the exit 140b of the dust container 140 are formed through the external case 141a. A first opening 141g' and a second opening 141g" corresponding to the first and second holes 141a' and 141a" are formed through the flow separation member 141g. With this structure, when the flow separation member 141g is coupled to the inner side of the external case 141a, the first hole 141a' and the first opening 141g' communicate with each other to form the entrance 140a of the dust container 140, and the second hole 141a" and the second opening 141g" communicate with each other to form the exit 140b of the dust container 140.

The flow separation member 141g may be provided with insertion protrusions 141g2 which are inserted into recesses 141a1 formed on an inner circumferential surface of the external case 141a. Also, a support rib 141g3 may protrude from an upper portion of the flow separation member 141g along a circumference, such that the flow separation member 141g can be supported on an upper end of the external case 141a.

The flow separation member 141g has a hollow portion and is provided with a flow separating part 141g1 surrounding the hollow portion along a circumference. The hollow portion of the flow separation member 141g is configured to overlap the cover 141k such that air discharged through the communication holes 141k' can be introduced into an upper portion of the flow separating parts 141g1.

The first and second openings 141g' and 141g" are formed on surfaces of the flow separation member 141g, which are opposite to each other. As shown in this figure, the first opening 141g' is provided on a bottom surface of the flow separation member 141g, so that air introduced through the entrance 140a flows at a lower portion of the flow separation member 141g. The second opening 141g" is provided on a top surface of the flow separation member 141g, so that air discharged toward the exit 140b flows at an upper portion of the flow separation member 141g.

The flow separation member 141g is formed to block between the first opening 141g' and the second opening 141g", so that air introduced through the first opening 141g' and air discharged toward the second opening 141g" are separated from each other.

The first opening 141g' may be provided with a guide part 141g4 which extends from one side of the first opening 141g' to guide air introduced into the dust container 140 to form a rotational flow..

The exit 140b of the dust container 140 may be preferably formed to minimize flow loss and to harmonize with peripheral structures without interruption.

The first opening 141g' and the second opening 141g" may be laterally disposed side by side along the circumference of an upper portion of the flow separation member 141g. Accordingly, the entrance 140a and the exit 140b of the dust container 140 corresponding to the first and second openings 141g' and 141g", respectively, may be formed at the same height of the dust container 140.

The entrance 140a is formed at an upper portion of the dust container 140 such that air introduced into the dust container 140 does not scatter dust collected on the bottom of the dust container 140.

In a cleaner (e.g., an upright type cleaner, a canister type cleaner, etc.) in which the height of the multi-cyclone is less restricted, an exit is typically installed at a position higher than that of an entrance. However, in the robot cleaner 100 of the present disclosure, when the capacity of the dust container 140 is to increase while considering of height restriction, the exit 140b along with the entrance 140a may be formed at the same height of the dust container 140.

In the structure of the present disclosure, in which air introduced through the entrance 140a is guided by the downwardly inclined flow separating part 141g1, an angle at which the air introduced through the entrance 140a flows downward is related to inclination of the flow separating part 141g1. In this respect, if the inclination of the flow separating part 141g1 is large, the air introduced through the entrance 140a does not receive a sufficient centrifugal force, and may scatter dust collected on the bottom of the dust container 140.

In this respect, the inclination of the flow separating part 141g1 may be preferably as small as possible. Since the flow separating part 141g1 is continued from an upper side of the entrance 140a to a lower side of the exit 140b, when the entrance 140a and the exit 140b are formed at the same height of the dust container 140, the downward inclination of the flow separating part 141g1 becomes more gentle as the length of the flow separating part 141g1 becomes longer. Accordingly, the flow separating part 141g1 is formed longest when the second opening 141g" is located immediately next to the first opening 141g'. As a result, the guide part 141a has the gentlest inclination.

In this figure, there is illustrated a structure in which the entrance 140a and the exit 140b are laterally formed side by side at an upper end of the external case 141a. The flow separation member 141g may have a shape downwardly inclined spirally along an inner circumferential surface of the external case 141a from an upper end of the first opening 141g' to the lower end of the second opening 141g".

The inner case 141h, the cover 141k and the flow separation member 141g are coupled together. As illustrated, the inner case 141h may be provided with coupling bosses 141h" for coupling to the cover 141k and the flow separation member 141g.

The multi-cyclone provided within the dust container 140 filters foreign substances or dust in air introduced into the dust container 140 through the entrance 140a. The air having the foreign substances or dust filtered therefrom ascends and flows toward the exit 140b at an upper portion of the flow separating part 141g1. In the present disclosure, the dust container 140 has a structure in which foreign substances or dust is again filtered before the air flowing as described above is finally discharged through the exit 140b.

A filter 141f that passes through the multi-cyclone and then filters foreign substances or dust in air discharged toward the exit 140b is provided at a rear surface of the upper cover 141d. The filter 141f is disposed to cover the cover 141k, so that dust in air passing through the vortex finder of the second cyclone 147b can be filtered by the filter 141f.

In a state in which the upper cover 141d is mounted to the upper case 141b, the filter 141f is disposed to cover the cover 141k. For example, the filter 141f may be adhered closely to the top surface of the flow separating part 141g1 or be adhered closely to a top surface of the cover 141k.

The filter 141f may be mounted to a mounting rib 141e protruding from the rear surface of the upper cover 141d. In this figure, there is illustrated a structure in which the mounting rib 141e includes a plurality of protruding parts 141e' and a mounting part 141e". The mounting rib 141e may be integrally formed with the upper cover 141d in injection molding of the upper cover 141d.

The protruding parts 141e' are formed to protrude from the rear surface of the upper cover 141d, and are provided at a plurality of places, respectively. The mounting part 141e" is disposed to be spaced apart from the rear surface of the upper cover 141d at a certain distance, and is supported at a plurality of places by the plurality of protruding parts 141e'. The mounting part 141e" may be formed in a loop shape larger than the hollow portion of the flow separation member 141g.

The filter 141f includes a filter part 141f' and a sealing part 141f".

The filter part 141f' is disposed to cover the hollow portion of the flow separation member 141g or the cover 141k to filter foreign substances or dust in air discharged through the communication holes 141k of the cover 141k. The filter part 141f' may have a mesh shape.

The sealing part 141f" is disposed to surround the filter part 141f', and is mounted to the mounting part 141e" to allow the filter 141f to be fixed to the mounting rib 141e. In order for the filter 141f to be fixed to the mounting rib 141e, a groove into the mounting part 141e" is inserted may be formed in the sealing part 141f". The sealing part 141f" may be adhered closely to the top surface of the flow separating part 141g1 or the top surface of the cover 141k to cover the communication holes 141k' of the cover 141k.

According to the above-described structure, air from which foreign substances or dust is filtered by the multi-cyclone is discharged toward the exit 140b through an empty space between the protruding parts 141e' by passing through the filter part 141f'. Here, the empty space is formed at the outer circumference of the filter 141f, and communicates with an upper portion of the flow separating part 141g1. In addition, the sealing part 141f" is configured to seal a gap between the filter 141f and the top surface of the flow separating part 141g1 adhered closely to the filter 141f or the top surface of the cover 141k, so that it is possible to prevent foreign substances or dust in air from being discharged toward the exit 140b through the gap.

Other detailed components of the dust container 140 have structural relations of the dust container cover 150, and therefore, will be described with the dust container cover 150.

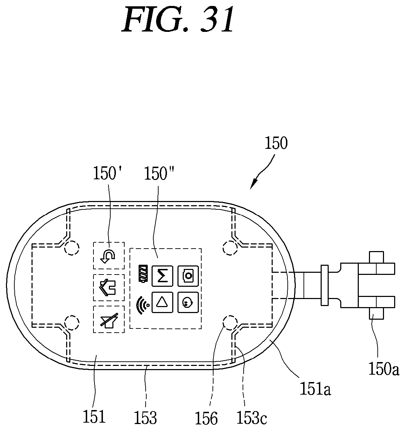

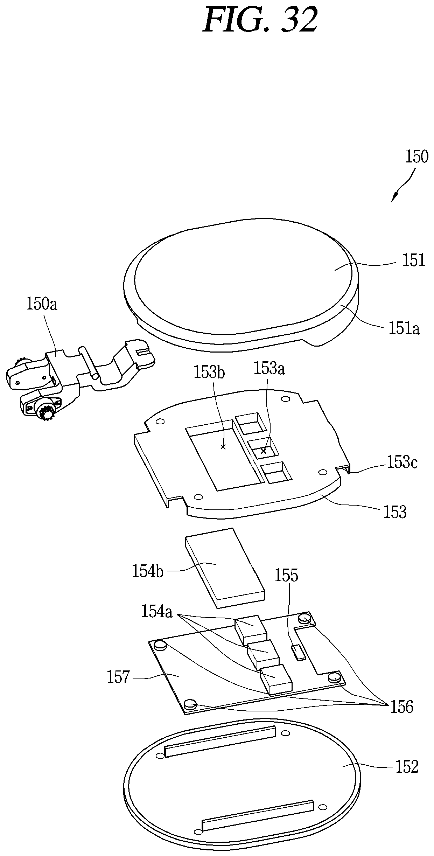

FIG. 31 is a view illustrating the dust container cover 150 shown in FIG. 1. FIG. 32 is an exploded perspective view of the dust container cover 150 shown in FIG. 31.

Referring to FIGS. 31 and 32 in conjunction with FIGS. 1 to 3, the dust container cover 150 is rotatably coupled to the cleaner body 110 by a hinge part 150a, and is disposed to completely cover a top surface of the dust container 140 when the dust container cover 150 is coupled to the dust container 140. In this disposal state, a portion of the dust container cover 150 is accommodated in at the dust container accommodation part 113, and the other portion of the dust container cover 150 may be formed to protrude toward the rear of the cleaner body 110 (i.e., in the reverse direction R opposite to the forward direction F). The hinge part 150a is configured to elastically pressurize the dust container cover 150 in the upper direction. Therefore, when the dust container cover 150 is not coupled to the dust container 140, the dust container cover 150 may be tilted upwardly inclined with respect to the top surface of the dust container 140.

The dust container cover 150 may be formed in an elliptical shape long in the front-rear direction of the cleaner body 110 to completely cover the circular dust container 140 when the dust container cover 150 is coupled to the dust container 140. A recessed part 116 dented from the top surface of the cleaner body 110 is formed along the outer circumference of the dust container accommodation part 113 in the cleaner body 110 (see FIGS. 19 and 23). The dust container cover 140 is accommodated in the dust container accommodation part 113 through rotation thereof. At this time, the dust container cover 150 is disposed to simultaneously cover the top surface of the dust container and the recessed part 116. A front-rear length of the dust container cover 150 corresponding to the front-rear direction of the cleaner body 110 may be formed longer than a left-right length of the dust container cover 150 corresponding to the left-right direction of the cleaner body 110. The left-right direction is formed equal to or longer than a radius of the dust container cover 150.

The dust container cover 150 may be provided with at least one of a touch key 150', a touch screen 150", and a display (not shown). The touch screen 150" may be distinguished from the display that outputs visual information but has no touch function, in that the touch screen 150" outputs visual information and receives a touch input to the visual information.

The dust container cover 150 includes a top cover 151, a bottom cover 152, and a middle frame 153 between the top cover 151 and the bottom cover 152. The components may be formed of a synthetic resin material.

The top cover 151 may be configured to have transparency. For example, the top cover itself may be formed to have translucency. Alternatively, the top cover itself may be formed to have the transparency, and a film attached to a rear surface of the top cover 151 may be formed to have the translucency. As the top cover 151 has the transparency, a pictogram of the touch key 150' or visual information output from the touch screen 150" or the display may be transmitted to a user through the top cover 151.

A touch sensor that senses a touch input to the top cover 151 may be attached to the rear surface of the top cover 151. The touch sensor may constitute a touch key module 154a and/or a touch screen module 154b, which will be described later.

The bottom cover 152 is coupled to the top cover 151, so that the top cover 151 and the bottom cover 152 form an appearance of the dust container cover 150. The bottom cover 152 may be formed of an opaque material, and form a mounting surface on which electronic devices or a sub-circuit board 151 can be mounted in the dust container cover 150.

The hinge part 150a rotatably coupled to the cleaner body 110 may be coupled to the top cover 151 or the bottom cover 152. The hinge part 150a may be provided in the top cover 151 or the bottom cover 152.

The electronic devices or the sub-circuit board 157 may be mounted on the bottom cover 152. For example, the sub-circuit board 157 electrically connected to a main circuit board (not shown) of the cleaner body 110 may be mounted on the bottom cover 152. Here, the main circuit board may be configured as an example of the controller for operating various functions of the robot cleaner 100.

Various electronic devices are mounted on the sub-circuit board 157. In FIG. 23, it is illustrated that the touch key module 154a, the touch screen module 154b, and infrared receiving units 156 (e.g., IR sensors) are electrically connected on the sub-circuit board 157. The electrical connection includes not only that the electronic devices are mounted on the sub-circuit board 157 but also that the electronic devices are connected to the sub-circuit board 157 through a flexible printed circuit board (FPCB).

A pictogram is printed on the top cover above the touch key module 154a, and the touch key module 154a is configured to sense a touch input to the pictogram of the top cover 151. The touch key module 154a may include a touch sensor, and the touch sensor may be disposed to be attached or adjacent to the rear surface of the top cover 151. The touch key module 154a may further include a backlight unit that lights the pictogram.

The touch screen module 154b provides an output interface between the robot cleaner 100 and the user through the output of visual information. Simultaneously, the touch screen module 154b senses a touch input to the top cover 151 to provide an input interface between the robot cleaner 100 and the user. The touch screen module 154b includes a display that outputs visual information through the top cover 151 and a touch sensor that senses a touch input to the top cover 151, and the display and the touch sensor form a mutual-layered structure or is integrally formed, thereby implementing a touch screen.

The touch screen module 154b may be accommodated in a through-hole 153b of the middle frame 153 to be coupled to the middle frame 153 through bonding, hook-coupling, or the like. In this case, the touch screen module 154b may be electrically connected to the sub-circuit board 157 through the FPCB. The touch screen module 154b may be attached to or disposed adjacent to the rear surface of the top cover 151.

The dust container cover 150 may be provided with an acceleration sensor 155. The acceleration sensor 155 may be mounted on the sub-circuit board 157 or be electrically connected to the sub-circuit board 157 through the FPCB. The acceleration sensor 155 senses a gravitational acceleration acting on the acceleration sensor 155, which is divided into X, Y, and Z vectors perpendicular to one another.

The controller may sense whether the dust container cover 150 has been opened/closed, using X, Y, and Z vector values sensed by the acceleration sensor 155. Specifically, based on a state in which the dust container cover 150 is closed, at least two vector values are changed in a state in which the dust container cover 150 is opened (tilted). That is, the vector values sensed through the acceleration sensor 155 are changed depending on a degree to which the dust container cover 150 is inclined.

When a difference between vector values in the two states is equal to or greater than a preset reference value, the controller may determine that the dust container cover 150 has not been coupled to the dust container 140, to generate a corresponding control signal. For example, if the dust container cover 150 is in a tilted state as it is opened, the controller 155 may senses the tilted state to stop the driving of wheel unit 111 and generate an alarm.

In addition, if vibration is applied to the dust container cover 150, vector values sensed through the acceleration sensor 155 are changed. When a difference between the vector values, which is equal to or greater than the preset reference value, is sensed within a certain time, the state of the touch screen module 154b may be changed from a non-activation (OFF) state to an activation (ON) state. For example, if the user taps the dust container cover 150 plural times in a state in which the touch screen module 154b is not activated, the controller may sense the tapping of the user through the acceleration sensor 155 to change the state of the touch screen module 154b from the non-activation state to the active state.

A gyro sensor may be used instead of the acceleration sensor 155. Also, the acceleration sensor 155 and the gyro sensor may be used together, so that improved sensing performance can be implemented through complementary cooperation.

The infrared receiving units 156 may be disposed at corner portions of the sub-circuit board 157 to receive infrared signals transmitted from directions different from one another. Here, the infrared signal may be a signal output from a remote controller (not shown) for controlling the robot cleaner 100 in manipulation of the remote controller.

The middle frame 153 is disposed to cover the sub-circuit board 157, and has through-holes 153a and 153b respectively corresponding to the touch key module 154a and the touch screen module 154b, which are mounted on the sub-circuit board 157. Inner surfaces defining the through-holes 153a and 153b are formed to surround the touch key module 154a and a touch screen module 154b, respectively.

An accommodation part 153c that is disposed to cover an upper portion of each of the infrared receiving units 156 and has an opened front to receive infrared light may be provided at each corner portion of the middle frame 153. According to the above-described disposal, the infrared receiving unit 156 is disposed to face a side surface of the dust container cover 150 (specifically, a side surface of the top cover 151 having transparency). Since the upper portion of the infrared receiving unit 156 is covered by the accommodation part 153c, it is possible to prevent a malfunction of the infrared receiving unit 156, caused by a three-wavelength lamp disposed on a ceiling or sunlight.

At least one portion of the dust container cover 150 may be disposed to protrude further than the top surface of the cleaner body 110. As shown in these figure, the top cover 151 may be provided with a tapered part 151a extending downwardly inclined to the outside from a top surface thereof. The tapered part 151a may be formed to extend along the outer circumference of the top cover 151, and be located to protrude further than the top surface of the cleaner body 110 in the state in which the dust container cover 150 is coupled to the dust container 140 as shown in FIG. 3.

If a side surface vertically downwardly extending from the top surface of the top cover 151 is continuously formed, an infrared signal introduced into the top cover 151 at a corner portion of the top cover 151 is refracted or reflected, and therefore, the receiving performance of the infrared receiving unit 156 may be deteriorated. Further, if the side surface of the top cover 151 is completely covered by the top surface of the cleaner body 110, the receiving performance of the infrared receiving unit 156 may be further deteriorated.

However, according to the above-described structure, an infrared signal introduced into the top cover 151 can be introduced into the infrared receiving unit 156 disposed adjacent to the inside of the tapered part 151a without being almost refracted or reflected by the tapered part 151a. In addition, as the tapered part 151a is located to protrude further than the top surface of the cleaner body 110, and the infrared receiving unit 156 is provided in plural numbers to be spaced apart from each other at a certain distance inside the tapered part 151a, infrared signals can be received in all directions. Thus, the receiving performance of the infrared receiving unit 156 can be improved.

Hereinafter, a fixing structure of the dust container 140 will be described.

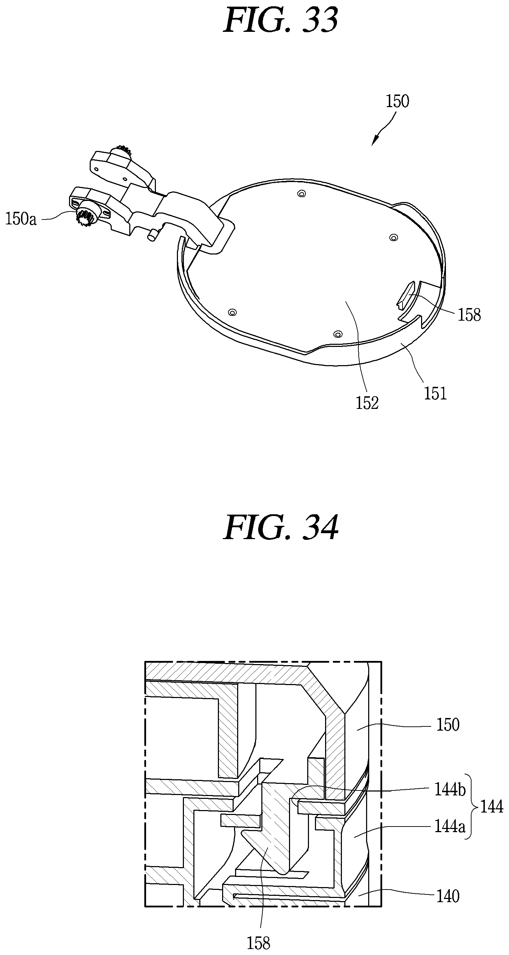

FIG. 33 is a view illustrating a rear surface of the dust container cover 150 shown in FIG. 31. FIG. 34 is a sectional view illustrating a structure in which a hook part 158 shown in FIG. 33 is fastened to the dust container 140.

Referring to FIGS. 33 and 34 in conjunction with FIG. 20, the dust container cover 150 is provided with the hook part 158 configured to be fastened to a locking part 144 of the dust container 140. In these figures, it is illustrated that the hook part 158 is formed to protrude at one side of the bottom surface of the bottom cover 152. The hook part 158 may be provided at the opposite side of the hinge part 150a.

When the hook part 158 is fastened to the locking part 144, the handle 143 provided at an upper portion of the dust container 140 is pressurized by the dust container cover 150 to be accommodated in the handle accommodation part 142. If the fastening between the hook part 158 and the locking part 144 is released, the handle 143 is pressurized by the elastic member to protrude from the handle accommodation part 142. As described above, the handle 143 may be disposed inclined with respect to the upper case 141b.

The locking part 144 provided in the dust container 140 includes a button part 144a and a holding part 144b. The locking part 144 is exposed to the rear of the cleaner body 110.

The button part 1440 is disposed at a side surface of the dust container 140 to permit pressing manipulation, and the holding part 146b is configured such that the hook part 158 of the dust container cover 150 can be locked thereto. Also, the holding part 146b is configured such that the locking of the holding part 146b to the hook part 158 is released in the pressing manipulation of the button part 144a. The holding part 144b may be formed at an upper portion of the dust container 140.

In the above, the case where the hook part 158 is provided in the dust container cover 150 and the locking part 144 is provided in the dust container 140 has been described as an example, but formation positions of the hook part 158 and the locking part 144 may be changed from each other. In other words, the locking part may be provided in the dust container cover 150 and the hook part may be provided in the dust container 140.

As described above, the dust container cover 150 is detachably coupled to the dust container by the fastening structure between the hook part 158 and the locking part 144. That is, there exists no direct fastening relation between the dust container cover 150 and the cleaner body 110, and the dust container cover 150 is fastened to the dust container 140 accommodated in the dust container accommodation part 113.

As described above, the dust container 140 accommodated in the dust container accommodation part 113 is restricted from being moved in the lateral direction by the fastening between the mounting projection 113b and the mounting groove 149 and the fastening between the locking hook 145 and the step 116a'. In the state in which the dust container 140 is accommodated in the dust container accommodation part 113, if the dust container cover 150 is fastened to the dust container 140 in a state in which the dust container cover 150 covers the dust container 140, the dust container 140 is also restricted from being moved upward. Thus, the dust container 140 can be prevented from being separated from the dust container accommodation part 113.

When the dust container 140 is not mounted, the dust container cover 150 is in a state in which it is freely rotatable about the hinge part 150a, i.e., a non-fixing state. As described above, the dust container cover 150 may be disposed upwardly tilted in the non-fixing state.

The dust container cover 150 is disposed in a horizontal state only when the dust container cover 150 is fastened to the dust container 140. If the dust container cover 150 is not fastened to the dust container 140, the dust container cover 150 is in a state in which it is tilted upwardly inclined. In a state in which the dust container 140 is not accommodated in the dust container accommodation part 113, the dust container cover 150 is also in the state in which it is tilted upwardly inclined.

Thus, the user can intuitively check whether the dust container cover 150 has been fasted to the dust container 140, by checking, with the naked eye, whether the dust container cover 150 is in the state in which it is tilted.

Meanwhile, air filtered in the dust container 140 is discharged from the dust container and finally discharged to the outside through the exhaust port 112. Here, a filter unit 160 that filters fine dust included in the filtered air is disposed at the front of the exhaust port 112. Hereinafter, the filter unit 160 will be described.

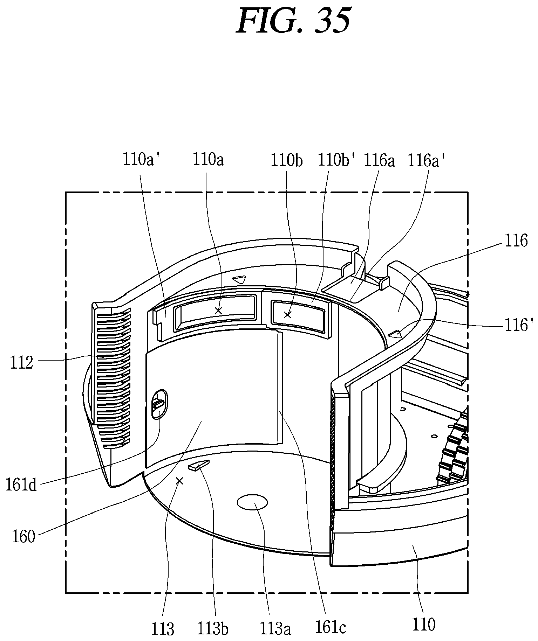

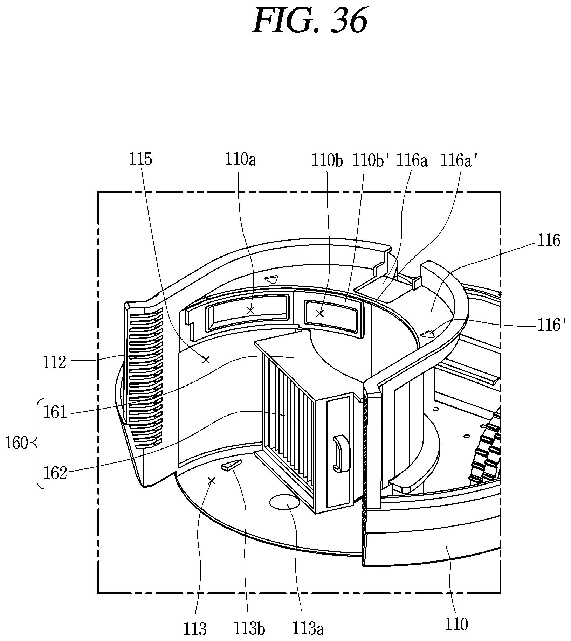

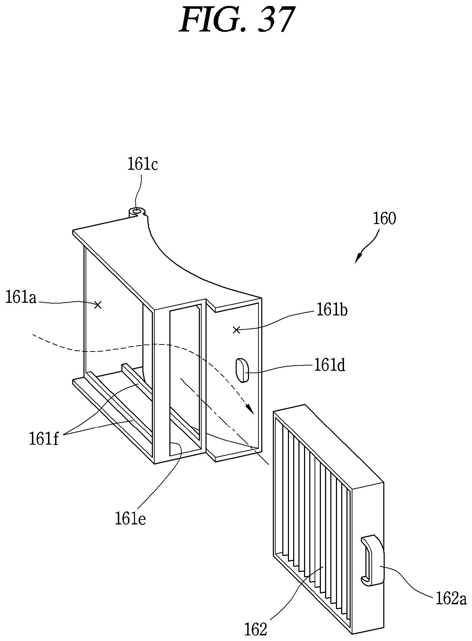

FIG. 35 is a view illustrating an inside of the dust container accommodation part 113 shown in FIG. 19. FIG. 36 is a conceptual view illustrating a state in which the filter unit 160 shown in FIG. 35 is rotated. FIG. 37 is an exploded perspective view of the filter unit 160 shown in FIG. 36.

Referring to FIGS. 35 to 37, the filter unit 160 is accommodated in the cleaner body 110, and is disposed at the front of the exhaust port 112. The filter unit 160 is exposed to the outside when the dust container 140 is separated from the dust container accommodation part 113. Here, the exhaust port 112 may be formed in an inner wall of the cleaner body 110 that defines the dust container accommodation part 113. The exhaust port 112 may be formed at one (left or right) end portion of the cleaner body 110 that surrounds the dust container accommodation part 113. In this exemplary embodiment, it is illustrated that the exhaust port 112 is formed long along the height direction of the cleaner body 110 at the left end portion of the dust container accommodation part 113 on the drawing.

As described above, air discharged from the second opening 110b is guided to the exhaust port 112 through the exhaust flow path. In the structure in which the exhaust port 112 is formed at the one end portion of the cleaner body 110, the exhaust flow path extends to the one end of the cleaner body 100. The filter unit 160 is disposed on the exhaust flow path.

The filter unit 160 includes a filter case 161 and a filter 162.

The filter case 161 is provided with a hinge part 161c hinge-coupled to the inner wall of the cleaner body 110 that defines the dust container accommodation part 113. Therefore, the filter case 161 is configured to be rotatable with respect to the cleaner body 110.

The filter case 161 includes a filter accommodation part 161a and a ventilation port 161b that communicates with the filter accommodation part 161a and is disposed to face the exhaust port 112. Air introduced into the filter case 161 is discharged to the ventilation port 161b via the filter 162 mounted in the filter accommodation part 161a.

The filter 162 is mounted in the filter accommodation part 161a. A HEPA filter for filtering fine dust may be used as the filter 162. A handle 162a may be provided to the filter 162.

In FIG. 30, it is illustrated that the filter accommodation part 161a is formed at a front surface of the filter case 161, and the ventilation port 161b is formed in a side surface of the filter case 161. More specifically, a through-hole 161e is formed in the side surface of the filter case 161, and a guide rail 161f protrudes along the insertion direction of the filter 162 on a bottom surface of the filter case 161 to guide the insertion of the filter 162 through the through-hole 161e.

The structure in which the filter 162 is mounted in the filter case 161 is not limited thereto. As another example, unlike the structure shown in FIG 30, the filter 162 may be mounted at a front surface of the filter case 161 to be accommodated in the filter accommodation part 161a. In this case, the filter 162 may be fixed to the filter accommodation part 161a through hook coupling.

The filter case 161 may be received in the cleaner body 110 through an opening 115 formed in the inner wall of the cleaner body 110, and an outer surface of the filter case 161 is exposed to the outside in the state in which the filter case 161 is received in the cleaner body 110 to define the dust container accommodation part 113 together with the inner wall of the cleaner body 110. To this end, the outer surface of the filter case 161 may have a rounded shape, and be preferably formed as a curved surface having the substantially same curvature as the inner wall of the dust container accommodation part 113.

A knob 161d may be formed on one surface of the filter case 161 that defines the dust container accommodation part 113 together with the inner wall of the cleaner body 110. Referring to FIGS. 2 and 19, when the dust container 140 is accommodated in the dust container accommodation part 113, the dust container 140 is configured to cover the filter case 161, and the knob 161d is not exposed to the outside as the dust container 140 covers the knob 161d.

The filter case 161 may be disposed in the dust container accommodation part 113 in a state in which the filter case 161 is rotated to open the opening 115. According to the above-described structure, the filter accommodation part 161a is exposed to the outside, so that the filter 162 can be easily replaced.

This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A robot cleaner (100) comprising:
a cleaner body (110) including a wheel unit (111) and a controller configured to control driving of the wheel unit (111);
a dust container (140) detachably coupled to a dust container accommodation part (113) of the cleaner body (110); and
a dust container cover (150) rotatably coupled to the cleaner body (110), the dust container cover (150) being detachably coupled to the dust container (140) to cover the dust container (140),
**characterized in that** the dust container cover (150) includes:
a top cover (151);
a bottom cover (152) coupled to the top cover (151) to form an appearance of the dust container cover (150) together with the top cover (151), on which an electronic device is mounted; and
a middle frame (153) disposed between the top cover (151) and the bottom cover (152).

2. The robot cleaner (100) of claim 1, wherein a through-hole (153a, 153b) is formed in the middle frame (153) to accommodate the electronic device.

3. The robot cleaner (100) of claim 2, wherein the electronic device includes a touch screen module (154b) provided at the dust container cover (150), and
wherein the touch screen module (154b) is accommodated in the through-hole (153b) to be coupled to the middle frame (153).

4. The robot cleaner (100) of claim 3, wherein the touch screen module (154b) is attached to or disposed adjacent to the rear surface of the top cover (151).

5. The robot cleaner (100) of any one of claims 3 to 4, wherein the touch screen module (154b) is coupled to the middle frame (153) through bonding or hook-coupling.

6. The robot cleaner (100) of any one of claims 3 to 5, wherein the electronic device further includes a touch key module (154a) provided at the dust container cover (150),
wherein the through-hole (153a, 153b) comprises a plurality of through-holes (153a, 153b), and
wherein the plurality of through-holes (153a, 153b) respectively corresponds to the touch key module (154a) and the touch screen module (154b).

7. The robot cleaner (100) any one of claims 1 to 6 wherein the electronic device includes an infrared receiving unit (156) disposed to face a side surface of the dust container cover (150).

8. The robot cleaner (100) of claim 7, wherein an accommodation part (153c) disposed to cover an upper portion of the infrared receiving unit (156) is provided at each corner portion of the middle frame (153).

9. The robot cleaner (100) any one of claims 7 to 8, wherein a tapered part (151a) is formed to extend along the outer circumference of the top cover (151), and
wherein the infrared receiving unit (156) is disposed at the inside of the tapered part (151a).

10. The robot cleaner (100) of claim 9, wherein the tapered part (151a) is located to protrude further than the top surface of the cleaner body (110).

11. The robot cleaner (100) any one of claims 1 to 8, wherein the middle frame (153) is disposed to cover a sub-circuit board (157).

12. The robot cleaner (100) of claim 9, wherein the bottom cover (152) forms a mounting surface on which the electronic devices or a sub-circuit board (157) is mounted in the dust container cover (150).

13. The robot cleaner (100) any one of claims 1 to 12, wherein, when the dust container cover (150) is not coupled to the dust container (140), the dust container cover (150) is tilted upwardly inclined with respect to the top surface of the dust container (140) by a hinge part (150a) providing an elastic pressurizing force to an upper side of the dust container cover (150).

14. The robot cleaner (100) of any one of claims 1 to 13, wherein the dust container (140) is mounted at the regular position of the dust container accommodation part (113) as a mounting projection (113b) is accommodated in a mounting groove (149) corresponding to the mounting projection, and
wherein the mounting projection (113b) is formed at both left and right sides with respect to the center of the dust container (140)

15. The robot cleaner (100) of any one of claims 1 to 14, further comprising:
a display provided at the dust container cover (150) and configured to output visual information through the top cover (151),
wherein the electric device includes a sensor, and
wherein the controller is configured to determine a state of the dust container cover (150) based on information detected by the sensor.

## Patentansprüche

1. Roboterreiniger (100), der aufweist:
einen Reinigerkörper (110) mit einer Radeinheit (111) und einer Steuerung, die konfiguriert ist, das Antreiben der Radeinheit (111) zu steuern;
einen Staubbehälter (140), der abnehmbar mit einem Staubbehälter-Aufnahmeteil (113) des Reinigerkörpers (110) gekoppelt ist, und
eine Staubbehälterabdeckung (150), die drehbar mit dem Reinigerkörper (110) gekoppelt ist, wobei die Staubbehälterabdeckung (150) abnehmbar mit dem Staubbehälter (140) gekoppelt ist, um den Staubbehälter (140) abzudecken;
**dadurch gekennzeichnet, dass** die Staubbehälterabdeckung (150) umfasst:
eine obere Abdeckung (151);
eine untere Abdeckung (152), die mit der oberen Abdeckung (151) gekoppelt ist, um zusammen mit der oberen Abdeckung (151) ein Erscheinungsbild der Staubbehälterabdeckung (150) zu bilden, auf der eine elektronische Vorrichtung montiert ist; und
einen mittleren Rahmen (153), der zwischen der oberen Abdeckung (151) und der unteren Abdeckung (152) angeordnet ist.

2. Roboterreiniger (100) nach Anspruch 1, wobei ein Durchgangsloch (153a, 153b) in dem mittleren Rahmen (153) gebildet ist, um die elektronische Vorrichtung aufzunehmen.

3. Roboterreiniger (100) nach Anspruch 2, wobei die elektronische Vorrichtung ein Berührungsbildschirmmodul (154b) umfasst, das an der Staubbehälterabdeckung (150) vorgesehen ist, und
wobei das Berührungsbildschirmmodul (154b) in dem Durchgangsloch (153a, 153b) aufgenommen ist, um mit dem mittleren Rahmen (153) gekoppelt zu sein.

4. Roboterreiniger (100) nach Anspruch 3, wobei das Berührungsbildschirmmodul (154b) an der hinteren Fläche der oberen Abdeckung (151) angebracht oder benachbart dazu angeordnet ist.

5. Roboterreiniger (100) nach einem der Ansprüche 3 bis 4, wobei das Berührungsbildschirmmodul (154b) durch Kleben oder Haken-Kopplung mit dem mittleren Rahmen (153) gekoppelt ist.

6. Roboterreiniger (100) nach einem der Ansprüche 3 bis 5, wobei die elektronische Vorrichtung ferner ein Berührungstastenmodul (154a) umfasst, das an der Staubbehälterabdeckung (150) vorgesehen ist,
wobei das Durchgangsloch (153a, 153b) mehrere Durchgangslöcher (153a, 153b) aufweist, und
wobei die mehreren Durchgangslöcher (153a 153b) jeweils dem Berührungstastenmodul (154a) und dem Berührungsbildschirmmodul (154b) entsprechen.

7. Roboterreiniger (100) nach einem der Ansprüche 1 bis 6, wobei die elektronische Vorrichtung eine Infrarotempfangseinheit (156) umfasst, die so angeordnet ist, dass sie einer Seitenfläche der Staubbehälterabdeckung (150) zugewandt ist.

8. Roboterreiniger (100) nach Anspruch 7, wobei ein Aufnahmeteil (153c), der so angeordnet ist, dass er einen oberen Abschnitt der Infrarotempfangseinheit (156) abdeckt, an jedem Eckabschnitt des mittleren Rahmens (153) vorgesehen ist.

9. Roboterreiniger (100) nach einem der Ansprüche 7 bis 8, wobei ein verjüngter Teil (151a) so gebildet ist, dass er sich entlang des Außenumfangs der oberen Abdeckung (151) erstreckt, und
wobei die Infrarotempfangseinheit (156) an der Innenseite des verjüngten Teils (151a) angeordnet ist.

10. Roboterreiniger (100) nach Anspruch 9, wobei der verjüngte Teil (151a) so angeordnet ist, dass er weiter als die obere Oberfläche des Reinigerkörpers (110) vorsteht.

11. Roboterreiniger (100) nach einem der Ansprüche 1 bis 8, wobei der mittlere Rahmen (153) so angeordnet ist, dass er eine Nebenleiterplatte (157) abdeckt.

12. Roboterreiniger (100) nach Anspruch 9, wobei die untere Abdeckung (152) eine Montagefläche bildet, auf der die elektronischen Vorrichtungen oder eine Nebenleiterplatte (157) in der Staubbehälterabdeckung (150) montiert sind.

13. Roboterreiniger (100) nach einem der Ansprüche 1 bis 12, wobei, wenn die Staubbehälterabdeckung (150) nicht mit dem Staubbehälter (140) gekoppelt ist, die Staubbehälterabdeckung (150) durch ein Scharnierteil (150a), das eine elastische Druckkraft auf eine obere Seite der Staubbehälterabdeckung (150) ausübt, in Bezug auf die obere Fläche des Staubbehälters (140) nach oben geneigt ist.

14. Roboterreiniger (100) nach einem der Ansprüche 1 bis 13, wobei der Staubbehälter (140) an der regulären Position des Staubbehälter-Aufnahmeteils (113) montiert ist, da ein Befestigungsvorsprung (113b) in einer Befestigungsnut (149) aufgenommen ist, die dem Befestigungsvorsprung entspricht, und
wobei der Befestigungsvorsprung (113b) sowohl auf der linken als auch auf der rechten Seite in Bezug auf die Mitte des Staubbehälters (140) ausgebildet ist.

15. Roboterreiniger (100) nach einem der Ansprüche 1 bis 14, der ferner aufweist:
eine Anzeige, die an der Staubbehälterabdeckung (150) vorgesehen ist und so konfiguriert ist, dass sie visuelle Informationen durch die obere Abdeckung (151) ausgibt,
wobei die elektrische Vorrichtung einen Sensor umfasst, und
wobei die Steuerung so konfiguriert ist, dass sie einen Zustand der Staubbehälterabdeckung (150) auf der Grundlage von Informationen bestimmt, die von dem Sensor erfasst werden.

## Revendications

1. Robot de nettoyage (100), comprenant :
un corps de nettoyeur (110) comportant une unité de roue (111) et un contrôleur prévu pour commander l'entraînement de l'unité de roue (111) ;
un bac à poussière (140) raccordé de manière amovible à une partie de réception (113) de bac à poussière du corps de nettoyeur (110) ; et
un couvercle (150) de bac à poussière raccordé de manière pivotante au corps de nettoyeur (110), ledit couvercle (150) de bac à poussière étant raccordé de manière amovible au bac à poussière (140) pour couvrir le bac à poussière (140),
**caractérisé en ce que** le couvercle (150) de bac à poussière comprend :
un couvercle supérieur (151) ;
un couvercle inférieur (152) raccordé au couvercle supérieur (151) pour donner son aspect au couvercle (150) de bac à poussière avec le couvercle supérieur (151), et sur lequel est monté un dispositif électronique ; et
un cadre intermédiaire (153) disposé entre le couvercle supérieur (151) et le couvercle inférieur (152).

2. Robot de nettoyage (100) selon la revendication 1, où un trou traversant (153a, 153b) est formé dans le cadre intermédiaire (153) pour recevoir le dispositif électronique.

3. Robot de nettoyage (100) selon la revendication 2, où le dispositif électronique comprend un module d'écran tactile (154b) prévu sur le couvercle (150) de bac à poussière, et
où le module d'écran tactile (154b) est logé dans le trou traversant (153a, 153b) de manière à être accouplé au cadre intermédiaire (153).

4. Robot de nettoyage (100) selon la revendication 3, où le module d'écran tactile (154b) est fixé à la surface arrière du couvercle supérieur (151) ou adjacent à celle-ci.

5. Robot de nettoyage (100) selon l'une des revendications 3 à 4, où le module d'écran tactile (154b) est accouplé au cadre intermédiaire (153) par adhérence ou par crochet.

6. Robot de nettoyage (100) selon l'une des revendications 3 à 5, où le dispositif électronique comprend en outre un module de touches tactiles (154a) prévu sur le couvercle (150) de bac à poussière,
où le trou traversant (153a, 153b) comprend une pluralité de trous traversants (153a, 153b), et
où la pluralité de trous traversants (153a, 153b) correspond respectivement au module de touches tactiles (154a) et au module d'écran tactile (154b).

7. Robot de nettoyage (100) selon l'une des revendications 1 à 6, où le dispositif électronique comprend une unité de réception infrarouge (156) disposée en face d'une surface latérale du couvercle (150) de bac à poussière.

8. Robot de nettoyage (100) selon la revendication 7, où une partie de réception (153c) disposée de manière à couvrir une partie supérieure de l'unité de réception infrarouge (156) est présentée dans chaque partie d'angle du cadre intermédiaire (153).

9. Robot de nettoyage (100) selon l'une des revendications 7 à 8, où une partie en biseau (151a) est formée de manière à s'étendre le long de la circonférence extérieure du couvercle supérieur (151), et où l'unité de réception infrarouge (156) est disposée à l'intérieur de la partie en biseau (151a).

10. Robot de nettoyage (100) selon la revendication 9, où la partie en biseau (151a) est située de manière à être plus en saillie que la surface supérieure du corps de nettoyeur (110).

11. Robot de nettoyage (100) selon l'une des revendications 1 à 8, où le cadre intermédiaire (153) est disposé de manière à recouvrir une carte de sous-circuit (157).

12. Robot de nettoyage (100) selon la revendication 9, où le couvercle inférieur (152) forme une surface de montage sur laquelle les dispositifs électroniques ou une carte de sous-circuit (157) sont montés dans le couvercle (150) de bac à poussière.

13. Robot de nettoyage (100) selon l'une des revendications 1 à 12, où, lorsque le couvercle (150) de bac à poussière n'est pas accouplé au bac à poussière (140), le couvercle (150) de bac à poussière est incliné vers le haut par rapport à la surface supérieure du bac à poussière (140) par une partie de charnière (150a) appliquant une force de pression élastique sur un côté supérieur du couvercle (150) de bac à poussière.

14. Robot de nettoyage (100) selon l'une des revendications 1 à 13, où le bac à poussière (140) est monté à l'emplacement normal de la partie de réception (113) de bac à poussière quand une saillie de montage (113b) est reçue dans une rainure de montage (149) correspondant à ladite saillie de montage, et
où la saillie de montage (113b) est formée sur le côté gauche et sur le côté droit par rapport au centre du bac à poussière (140).

15. Robot de nettoyage (100) selon l'une des revendications 1 à 14, comprenant en outre :
un écran situé sur le couvercle (150) de bac à poussière et prévu pour émettre des informations visuelles au travers du couvercle supérieur (151),
où le dispositif électrique comprend un capteur, et
où le contrôleur est prévu pour déterminer l'état du couvercle (150) de bac à poussière sur la base d'informations détectées par le capteur.
